# EUROPEAN PATENT SPECIFICATION

(11) **EP 4 403 405 B1**
(45) Date of publication and mention of the grant of the patent: **24.09.2025**
(21) Application number: 23218154.5
(22) Date of filing: 19.12.2023
(51) Int. Cl.: B60L 53/10, B60L 53/16, B60L 53/30, B60L 53/65, H02J 7/00

(54) **CHARGING DEVICE AND METHOD FOR CHARGING ELECTRIC VEHICLE BY CHARGING DEVICE**
LADEVORRICHTUNG UND VERFAHREN ZUM LADEN EINES ELEKTROFAHRZEUGS DURCH LADEVORRICHTUNG
DISPOSITIF DE CHARGE ET PROCÉDÉ DE CHARGE DE VÉHICULE ÉLECTRIQUE PAR LE DISPOSITIF DE CHARGE

(30) Priority: 20.01.2023 CN 202310142179
(43) Date of publication of application: 24.07.2024
(73) Proprietor: Huawei Digital Power Technologies Co., Ltd., Shenzhen, 518043 (CN)
(72) Inventor: LIU, Baoquan, Shenzhen, 518043 (CN); MA, Donghai, Shenzhen, 518043 (CN); WANG, Yichang, Shenzhen, 518043 (CN); LIAN, Zhisheng, Shenzhen, 518043 (CN)
(74) Representative: Epping - Hermann - Fischer

(56) References cited:
- CN-A- 105 449 791
- CN-B- 106 740 213

## Description

### TECHNICAL FIELD

This application relates to the field of new energy technologies, and in particular, to a charging device and a method for charging an electric vehicle by a charging device.

### BACKGROUND

CN 105 449 791 A1 describes that an intelligent output controller is used to select the number of output chargers and realize free switching between each charger and an intelligent charging system is suitable for all-in-one multi-gun output, in particular for charging multiple electric vehicles at the same time.

A DC intelligent charging pile for electric vehicles comprises a charging pile, a control system and a power unit: The charging pile includes a DC charging gun, a human-machine interface, an output contactor, a fuse, a shunt and a TC terminal. One end of the TC terminal is connected to the fuse and the shunt, and the other end is connected to the DC positive and negative common busbars of the power unit.

The power unit includes: an AC contactor, a lightning arrester, a charger, an intelligent output controller, a DC positive and negative common busbar and an AC common busbar. The public power grid is connected to the AC common busbar through the AC contactor. The AC common busbar supplies AC power to the charger. The DC output end of the charger automatically switches the connection mode with the DC positive and negative common busbar through the intelligent output controller. Two different wires in the DC positive and negative common busbar provide charging power to different DC chargers respectively. The charger exchanges data with the control system, and the control system controls the switch conversion mode of the intelligent output controller.

The control system includes a charging control unit, a battery management system BMS and a card reader, and the charging control unit is also connected to the background management system.

The intelligent output controller receives instructions from the charging control unit and shuts down one of the outputs of the closed intelligent controller, thereby realizing free switching between the charger and any public DC busbar, achieving effective load distribution and improving the utilization rate of the charger.

CN 105 449 791 A1 further describes that a process of charging using the charging system includes:
After the BMS and the charging control unit are physically connected and powered on, the BMS and the charger enter the handshake stage. In the handshake stage, the BMS first detects whether the low-voltage auxiliary power supply is normal. If it is not normal, the BMS sends an error message to the charger and the charging process is terminated. If the low-voltage auxiliary power supply is correct, the two parties shake hands in this stage to determine the battery-related information and the charger-related information.

With rapid development of new-energy vehicle battery technologies, a maximum charging current allowed by an electric vehicle battery has far exceeded a maximum current specified in national and foreign charging standards. Before the charging standards and an architecture of a charging pile are updated, how to quickly charge an electric vehicle that supports high-power charging is an urgent problem to be resolved.

In this case, many vehicle manufacturers design two vehicle sockets on an electric vehicle such as an electric coach, a heavy truck, or an electric bus, to implement high-power charging by inserting two charging guns simultaneously into one vehicle. However, when performing dual-gun simultaneous charging, a user usually needs to manually select dual-gun simultaneous charging on a human-computer interaction interface of a charging pile or a charging APP, which has a complex procedure.

### SUMMARY

The invention is set out in the appended set of claims.

This application provides a charging device and a method for charging an electric vehicle by a charging device. According to a first aspect, an embodiment of this application provides a charging device. The charging device includes a first charging interface and a second charging interface. The first charging interface and the second charging interface are configured to physically connect to a vehicle.

The first charging interface includes a first auxiliary power supply contact and a first direct current power supply contact. The first auxiliary power supply contact is configured to supply power to a controller of the electric vehicle. The second charging interface includes a second auxiliary power supply contact and a second direct current power supply contact.

After the first charging interface and the second charging interface are connected to the electric vehicle, the charging device is configured to detect a first voltage signal of the first auxiliary power supply contact and a second voltage signal of the second auxiliary power supply contact, and enable the first direct current power supply contact and the second direct current power supply contact based on the first voltage signal and the second voltage signal to simultaneously output currents to charge the electric vehicle.

The first voltage signal includes a first voltage value and a first time value. The first voltage value is a voltage value of the first auxiliary power supply contact, and the first time value is time at which the charging device obtains the first voltage value. The second voltage signal includes a second voltage value and a second time value. The second voltage value is a voltage value of the second auxiliary power supply contact, and the second time value is time at which the charging device obtains the second voltage value.

The electric vehicle includes two vehicle sockets, which are respectively configured to connect to the first charging interface and the second charging interface, to simultaneously charge the same electric vehicle by using the two charging interfaces.

The charging device further includes a first auxiliary power supply voltage detection module, a second auxiliary power supply voltage detection module, and a main control module. The first auxiliary power supply voltage detection module is configured to detect the voltage value of the first auxiliary power supply contact. The second auxiliary power supply voltage detection module is configured to detect the voltage value of the second auxiliary power supply contact. The main control module is configured to obtain the first voltage signal and the second voltage signal.

In a case that the main control module obtains the first voltage signal and the second voltage signal, the charging device is configured to: determine whether an absolute value of a difference between the first voltage value and the second voltage value is within a first preset threshold and whether an absolute value of a difference between the first time value and the second time value is within a second preset threshold. If the charging device determines that the absolute value of the difference between the first voltage value and the second voltage value is within the first preset threshold and that the absolute value of the difference between the first time value and the second time value is within the second preset threshold, the charging device is configured to enable the first direct current power supply contact and the second direct current power supply contact to charge the electric vehicle.

In a possible implementation, in a case that the absolute value of the difference between the first voltage value and the second voltage value is less than or equal to 2 V and the absolute value of the difference between the first time value and the second time value is less than or equal to 1 second, the charging device is configured to determine that the first charging interface and the second charging interface are connected to a same vehicle.

In a possible implementation, in a case that the absolute value of the difference between the first voltage value and the second voltage value is less than or equal to 2 V and the absolute value of the difference between the first time value and the second time value is less than or equal to 1.5 second, the charging device is configured to determine that the first charging interface and the second charging interface are connected to a same vehicle.

In a subsequent charging procedure, the main control module is configured to obtain charging requirement information of the vehicle, and allocate output voltages and output currents of the first charging interface and the second charging interface based on the obtained charging requirement information, so that the first direct current power supply contact and the second direct current power supply contact charge the same vehicle simultaneously.

The first charging interface further includes a first communication contact, and the second charging interface further includes a second communication contact. The first communication contact and the second communication contact are configured to be in communication with a controller BMS of the vehicle.

In a possible implementation, in a case that the main control module obtains the first voltage signal or the second voltage signal, the charging device is configured to:
obtain a first communication signal of the first communication contact, where the first communication signal includes first charging information, and the first charging information includes a first vehicle handshake message and a first vehicle recognition message;
obtain a second communication signal of the second communication contact, where the second communication signal includes second charging information, and the second charging information includes a second vehicle handshake message and a second vehicle recognition message; and
enable the first direct current power supply contact and the second direct current power supply contact based on the first charging information and the second charging information to simultaneously charge the electric vehicle.

A BHM includes information about an allowable charging voltage of the BMS, and a BRM includes information about a vehicle battery type, a rated battery capacity, a rated battery voltage, and a vehicle identification number. In a case that the first charging information is the same as the second charging information, the charging device enables the first direct current power supply contact and the second direct current power supply contact to charge the electric vehicle. In a possible implementation, the charging device is configured to determine, based on the information about the allowable charging voltage, the vehicle battery type, the rated battery capacity, and the rated battery voltage that is included in the BHM and the BRM, whether the first charging interface and the second charging interface are connected to a same vehicle. Specifically, if the information about the allowable charging voltage, the vehicle battery type, the rated battery capacity, and the rated battery voltage that is included in the first charging information is the same as the information about the allowable charging voltage, the vehicle battery type, the rated battery capacity, and the rated battery voltage that is included in the second charging information, the charging device is configured to determine that the first charging interface and the second charging interface are connected to the same vehicle.

In a possible implementation, the charging device is configured to determine, based on the vehicle identification number VIN, whether the first charging interface and the second charging interface are connected to a same vehicle. Specifically, if the VIN included in the first charging information is the same as the VIN included in the second charging information, the charging device is configured to determine that the first charging interface and the second charging interface are connected to the same vehicle.

In a subsequent charging procedure, the main control module is configured to obtain charging requirement information of the vehicle, and allocate output voltages and output currents of the first charging interface and the second charging interface based on the obtained charging requirement information, so that the first direct current power supply contact and the second direct current power supply contact charge the same vehicle simultaneously.

In a possible implementation, the charging device further includes at least one human-computer interaction interface configured to implement information exchange between a user and the charging device.

Based on the foregoing charging device, when a user needs to perform dual-gun simultaneous charging, no complex manual operation is required, and only charging guns need to be connected to sockets of a vehicle. After charging is started, the charging device can automatically implement dual-gun simultaneous charging on the vehicle, thereby simplifying a charging procedure and improving charging experience of the user.

According to a second aspect, an embodiment of this application further provides a method for charging an electric vehicle by a charging device, which is applicable to the foregoing charging device. The method includes:
detecting a first voltage signal of the first auxiliary power supply contact and a second voltage signal of the second auxiliary power supply contact; and
enabling the first direct current power supply contact and the second direct current power supply contact based on the first voltage signal and the second voltage signal to simultaneously charge the electric vehicle.

The first voltage signal includes a first voltage value and a first time value. The first voltage value is a voltage value of the first auxiliary power supply contact, and the first time value is time at which the charging device obtains the first voltage value. The second voltage signal includes a second voltage value and a second time value. The second voltage value is a voltage value of the second auxiliary power supply contact, and the second time value is time at which the charging device obtains the second voltage value.

The charging device further includes a first auxiliary power supply voltage detection module, a second auxiliary power supply voltage detection module, and a main control module. The first auxiliary power supply voltage detection module is configured to detect the voltage value of the first auxiliary power supply contact. The second auxiliary power supply voltage detection module is configured to detect the voltage value of the second auxiliary power supply contact. The main control module is configured to obtain the first voltage signal and the second voltage signal.

In a case that the main control module obtains the first voltage signal and the second voltage signal, the charging device determines whether an absolute value of a difference between the first voltage value and the second voltage value is within a first preset threshold and whether an absolute value of a difference between the first time value and the second time value is within a second preset threshold. If it is determined that the absolute value of the difference between the first voltage value and the second voltage value is within the first preset threshold and that the absolute value of the difference between the first time value and the second time value is within the second preset threshold, the charging device enables the first direct current power supply contact and the second direct current power supply contact to charge the electric vehicle.

In a possible implementation, in a case that the absolute value of the difference between the first voltage value and the second voltage value is less than or equal to 2 V and the absolute value of the difference between the first time value and the second time value is less than or equal to 1 second, the charging device determines that the first charging interface and the second charging interface are connected to a same vehicle.

In a possible implementation, in a case that the absolute value of the difference between the first voltage value and the second voltage value is less than or equal to 2 V and the absolute value of the difference between the first time value and the second time value is less than or equal to 1.5 second, the charging device determines that the first charging interface and the second charging interface are connected to a same vehicle.

In a subsequent charging procedure, the main control module obtains charging requirement information of the vehicle, and allocates output voltages and output currents of the first charging interface and the second charging interface based on the obtained charging requirement information, so that the first direct current power supply contact and the second direct current power supply contact charge the same vehicle simultaneously.

The first charging interface further includes a first communication contact, and the second charging interface further includes a second communication contact. The first communication contact and the second communication contact are configured to be in communication with a controller BMS of the vehicle.

In a possible implementation, in a case that the main control module obtains the first voltage signal or the second voltage signal, the charging device
obtains a first communication signal of the first communication contact, where the first communication signal includes first charging information, and the first charging information includes a first vehicle handshake message and a first vehicle recognition message;
obtains a second communication signal of the second communication contact, where the second communication signal includes second charging information, and the second charging information includes a second vehicle handshake message and a second vehicle recognition message, and
enables the first direct current power supply contact and the second direct current power supply contact based on the first charging information and the second charging information to simultaneously charge the electric vehicle.

A BHM includes information about an allowable charging voltage of the BMS, and a BRM includes information about a vehicle battery type, a rated battery capacity, a rated battery voltage, and a vehicle identification number. In a case that the first charging information is the same as the second charging information, the charging device enables the first direct current power supply contact and the second direct current power supply contact to charge the electric vehicle. In a possible implementation, the charging device determines, based on the information about the allowable charging voltage, the vehicle battery type, the rated battery capacity, and the rated battery voltage that is included in the BHM and the BRM, whether the first charging interface and the second charging interface are connected to a same vehicle. Specifically, if the information about the allowable charging voltage, the vehicle battery type, the rated battery capacity, and the rated battery voltage that is included in the first charging information is the same as the information about the allowable charging voltage, the vehicle battery type, the rated battery capacity, and the rated battery voltage that is included in the second charging information, the charging device determines that the first charging interface and the second charging interface are connected to the same vehicle.

In a possible implementation, the charging device determines, based on the vehicle identification number VIN, whether the first charging interface and the second charging interface are connected to a same vehicle. Specifically, if the VIN included in the first charging information is the same as the VIN included in the second charging information, the charging device determines that the first charging interface and the second charging interface are connected to the same vehicle.

In a subsequent charging procedure, the main control module obtains charging requirement information of the vehicle, and allocates output voltages and output currents of the first charging interface and the second charging interface based on the obtained charging requirement information, so that the first direct current power supply contact and the second direct current power supply contact charge the same vehicle simultaneously.

Based on the foregoing method for charging an electric vehicle, when a user needs to perform dual-gun simultaneous charging, no complex manual operation is required, and only charging guns need to be connected to sockets of a vehicle. After charging is started, dual-gun simultaneous charging can be automatically implemented on the vehicle by using the method, thereby simplifying a charging procedure and improving charging experience of the user.

According to a third aspect, an embodiment of this application further provides a method for charging an electric vehicle by a charging device, which is applicable to the foregoing charging device. The method includes:
storing a state machine, where the state machine includes a plurality of states, and each of the plurality of states is for managing an action in a charging process of the charging device. The plurality of states include a dual charging interface connection state and a dual charging interface power supply state. The dual charging interface connection state indicates that a first charging interface and a second charging interface are physically connected to the electric vehicle. The dual charging interface power supply state indicates that a first direct current power supply contact and a second direct current power supply contact simultaneously charge the electric vehicle. The state machine is configured to provide an entry condition and an exit condition of at least one of the plurality of states.

In a possible implementation, an exit condition of the dual charging interface connection state is that: the charging device controller detects that the voltage value of the charging connection confirmation contact of the first charging interface and the voltage value of the charging connection confirmation contact of the second charging interface are both 4 V

The plurality of states further include an auxiliary power supply power-on state, and the state indicates that an auxiliary power supply of the charging device supplies power to a controller of the electric vehicle.

In a possible implementation, an entry condition of the auxiliary power supply power-on state is that: the charging device controller detects that a voltage value of a charging connection confirmation contact of the first charging interface and a voltage value of a charging connection confirmation contact of the second charging interface are both 4 V An exit condition of the auxiliary power supply power-on state is that: the charging device controller detects a first voltage signal of an auxiliary power supply contact of the first charging interface or a second voltage signal of an auxiliary power supply contact of the second charging interface; or the charging device controller detects the first voltage signal and the second voltage signal, and the first voltage signal and the second voltage signal meet a preset condition.

The first voltage signal includes a first voltage value and a first time value. The first voltage value is a voltage value of the first auxiliary power supply contact, and the first time value is time at which the charging device obtains the first voltage value. The second voltage signal includes a second voltage value and a second time value. The second voltage value is a voltage value of the second auxiliary power supply contact, and the second time value is time at which the charging device obtains the second voltage value.

In a possible implementation, when determining an absolute value of a difference between the first voltage value and the second voltage value is less than or equal to 2 V and an absolute value of a difference between the first time value and the second time value is less than or equal to 1 second, the charging device exits the auxiliary power supply power-on state and enters the dual charging interface power supply state.

In a possible implementation, when determining an absolute value of a difference between the first voltage value and the second voltage value is less than or equal to 2 V and an absolute value of a difference between the first time value and the second time value is less than or equal to 1.5 second, the charging device exits the auxiliary power supply power-on state and enters the dual charging interface power supply state.

In a possible implementation, the plurality of states further include a dual charging handshake recognition state, and the state indicates that the charging device is in communication with the electric vehicle. An entry condition of the state is that: the charging device controller obtains the first voltage signal or the second voltage signal. An exit condition of the state is that: the charging device controller obtains a first communication signal and a second communication signal, and the first communication signal and the second communication signal meet a preset condition.

The first communication signal includes first charging information, and the first charging information includes a first vehicle handshake message and a first vehicle recognition message. The second communication signal includes second charging information, and the second charging information includes a second vehicle handshake message and a second vehicle recognition message. A BHM includes information about an allowable charging voltage of the BMS, and a BRM includes information about a vehicle battery type, a rated battery capacity, a rated battery voltage, and a vehicle identification number. When determining that the first charging information is the same as the second charging information, the charging device exits the dual charging handshake recognition state and enters the dual charging interface power supply state.

In a possible implementation, the charging device controller determines, based on the information about the allowable charging voltage, the vehicle battery type, the rated battery capacity, and the rated battery voltage that is included in the BHM and the BRM, whether the first charging interface and the second charging interface are connected to a same vehicle. Specifically, if the information about the allowable charging voltage, the vehicle battery type, the rated battery capacity, and the rated battery voltage that is included in the first charging information is the same as the information about the allowable charging voltage, the vehicle battery type, the rated battery capacity, and the rated battery voltage that is included in the second charging information, the charging device determines that the first charging interface and the second charging interface are connected to the same vehicle, exits the dual charging handshake recognition state, and enters the dual charging interface power supply state.

In a possible implementation, the charging device is configured to determine, based on the vehicle identification number VIN, whether the first charging interface and the second charging interface are connected to a same vehicle. Specifically, if the VIN included in the first charging information is the same as the VIN included in the second charging information, the charging device is configured to determine that the first charging interface and the second charging interface are connected to the same vehicle, exit the dual charging handshake recognition state, and enter the dual charging interface power supply state.

Based on the foregoing method for charging an electric vehicle, when a user needs to perform dual-gun simultaneous charging, no complex manual operation is required, and only charging guns need to be connected to sockets of a vehicle. After charging is started, dual-gun simultaneous charging can be automatically implemented on the vehicle by using the method, thereby simplifying a charging procedure and improving charging experience of the user.

### BRIEF DESCRIPTION OF DRAWINGS

FIG. 1 is a schematic diagram of a principle of a direct current charging control guidance circuit in GB/T 18487.1-2015 according to an embodiment of this application;
FIG. 2 is a schematic flowchart of a charging preparation process of a charging device according to an embodiment of this application;
FIG. 3 is a schematic diagram 1 of a structure of a charging device according to an embodiment of this application;
(a) in FIG. 4 is a schematic diagram of a contact of a direct current charging vehicle plug in GB/T 20234.3-2015 according to an embodiment of this application;

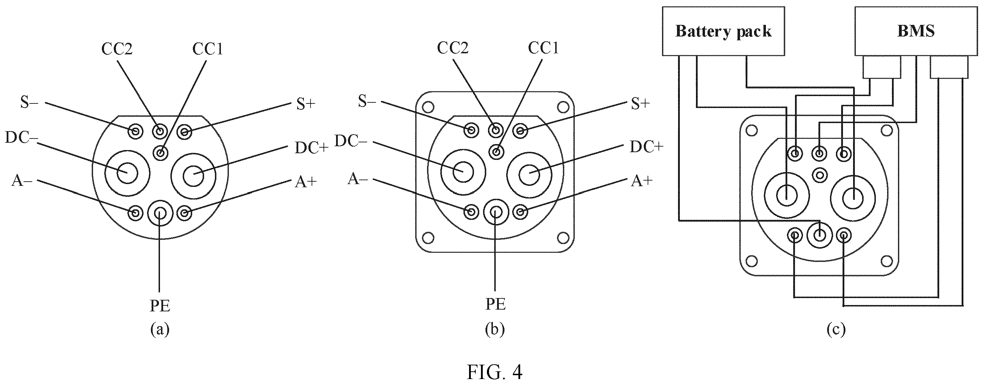

(b) in FIG. 4 is a schematic diagram of a contact of a direct current charging vehicle socket in GB/T 20234.3-2015 according to an embodiment of this application;
(c) in FIG. 4 is a diagram of a connection relationship between a contact of a direct current charging vehicle socket and a battery pack of a vehicle and a connection relationship between the contact of the direct current charging vehicle socket and a BMS of the vehicle according to an embodiment of this application;

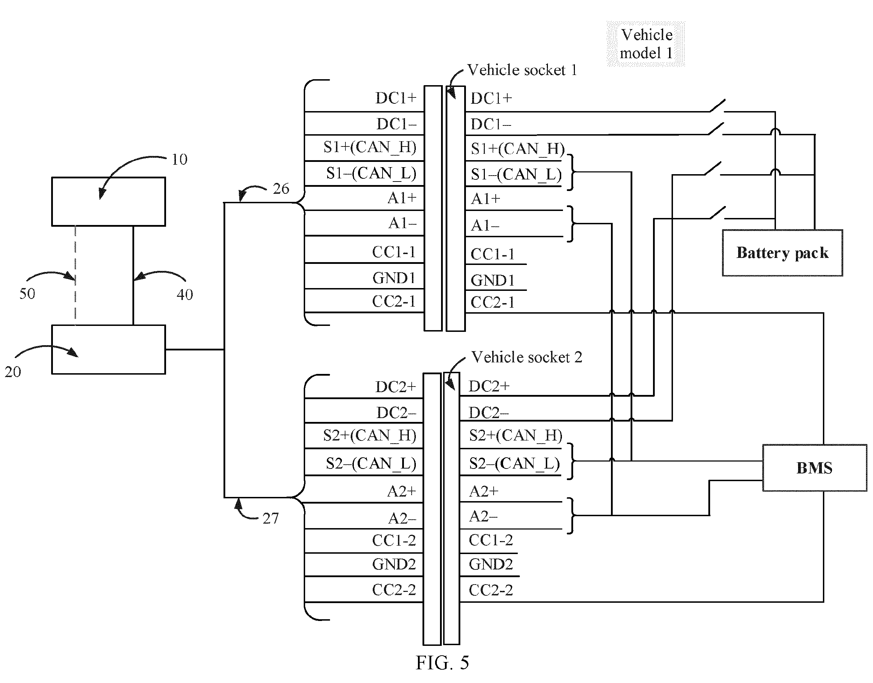

FIG. 5 is a schematic diagram 1 of an insertion interface between a charging interface of a charging device and a vehicle socket according to an embodiment of this application;

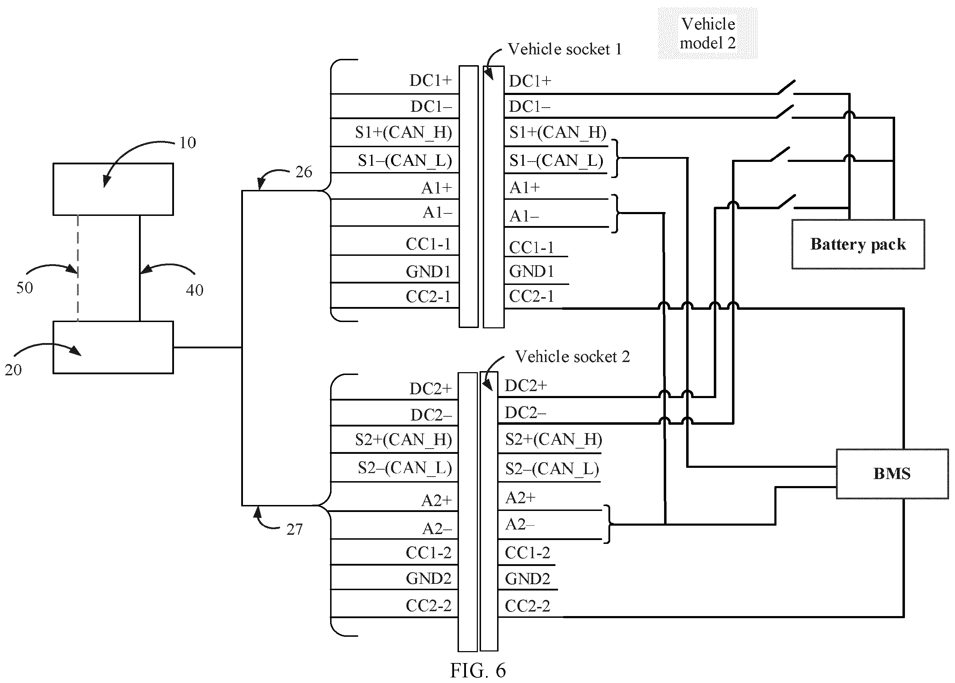

FIG. 6 is a schematic diagram 2 of an insertion interface between a charging interface of a charging device and a vehicle socket according to an embodiment of this application;

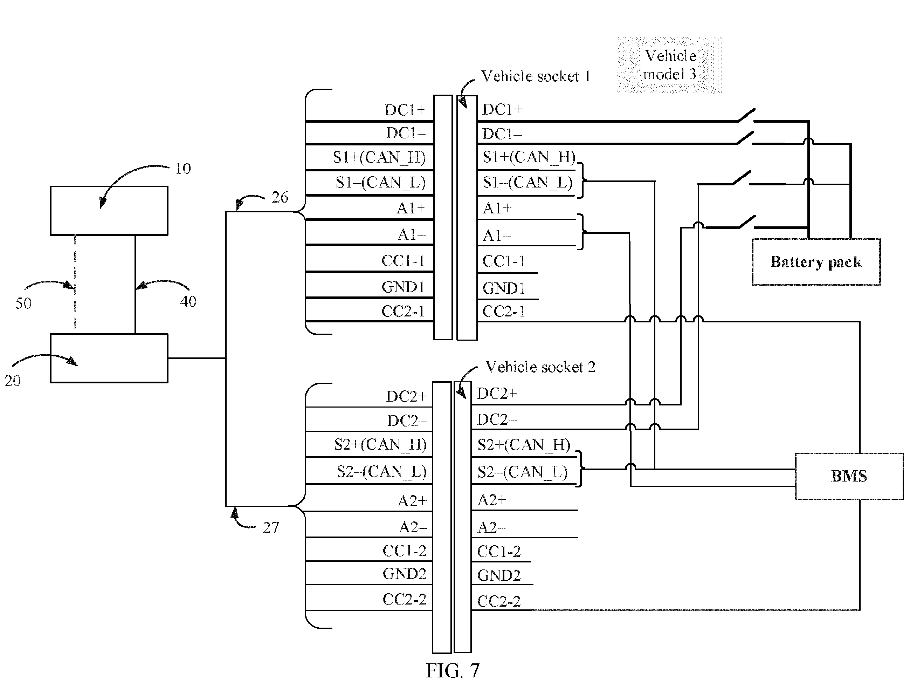

FIG. 7 is a schematic diagram 3 of an insertion interface between a charging interface of a charging device and a vehicle socket according to an embodiment of this application;

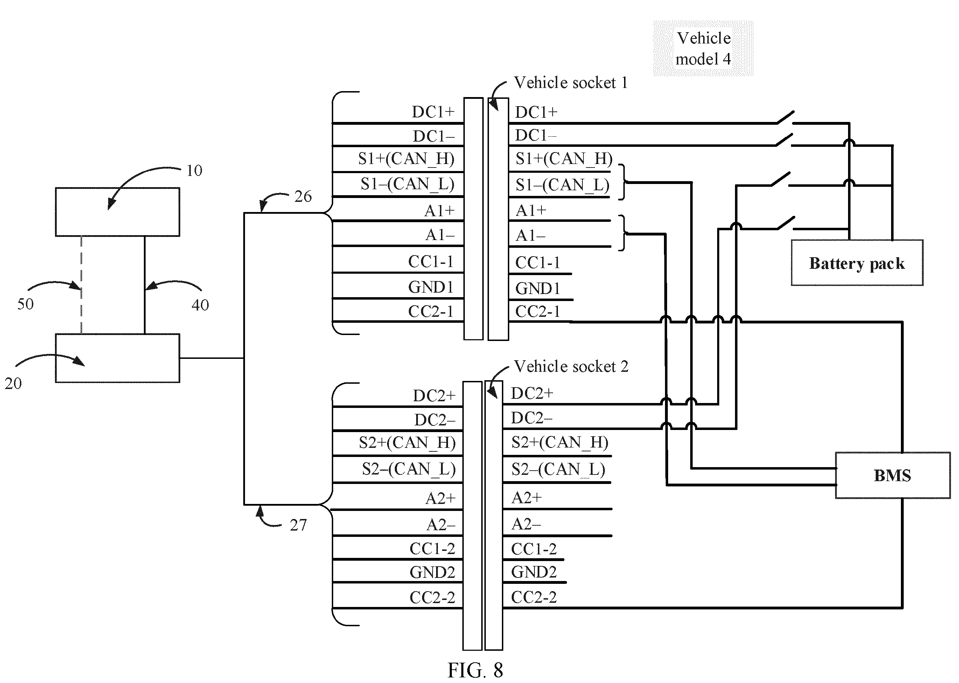

FIG. 8 is a schematic diagram 4 of an insertion interface between a charging interface of a charging device and a vehicle socket according to an embodiment of this application;

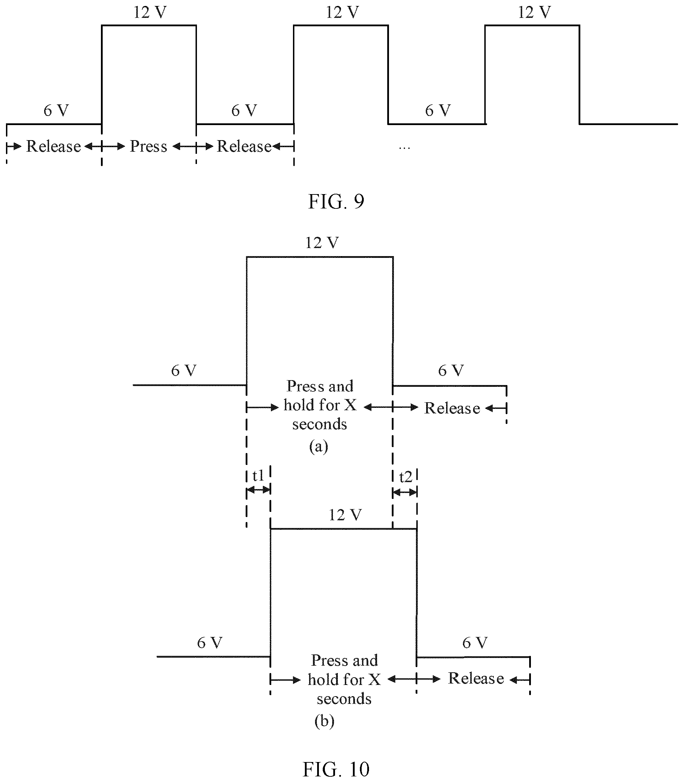

FIG. 9 is a schematic diagram 1 of a voltage change of a charging connection confirmation contact of a charging interface of a charging device according to an embodiment of this application;
FIG. 10 is a schematic diagram 2 of a voltage change of a charging connection confirmation contact of a charging interface of a charging device according to an embodiment of this application;

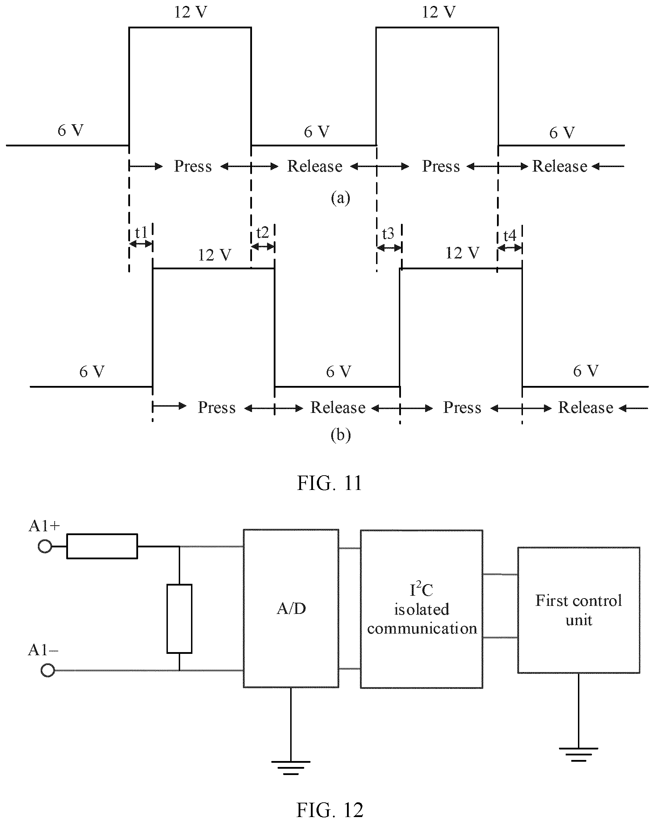

FIG. 11 is a schematic diagram 3 of a voltage change of a charging connection confirmation contact of a charging interface of a charging device according to an embodiment of this application;
FIG. 12 is a schematic diagram 1 of a connection of an auxiliary power supply voltage detection circuit according to an embodiment of this application;

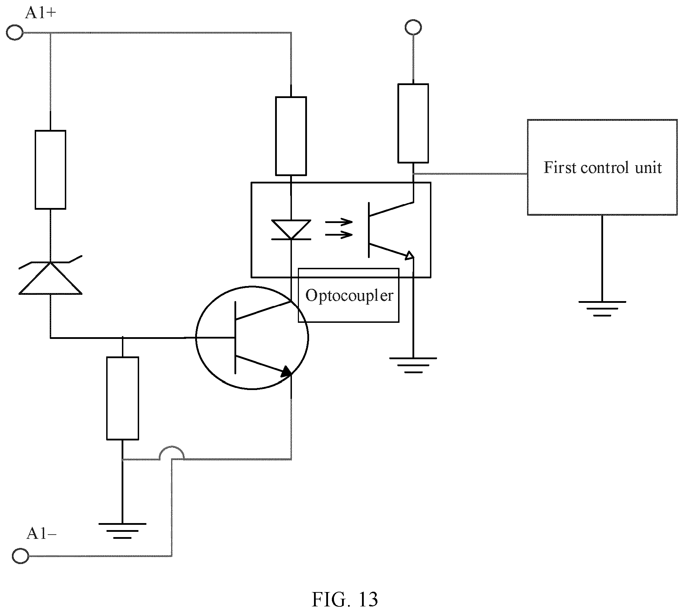

FIG. 13 is a schematic diagram 2 of a connection of an auxiliary power supply voltage detection circuit according to an embodiment of this application;

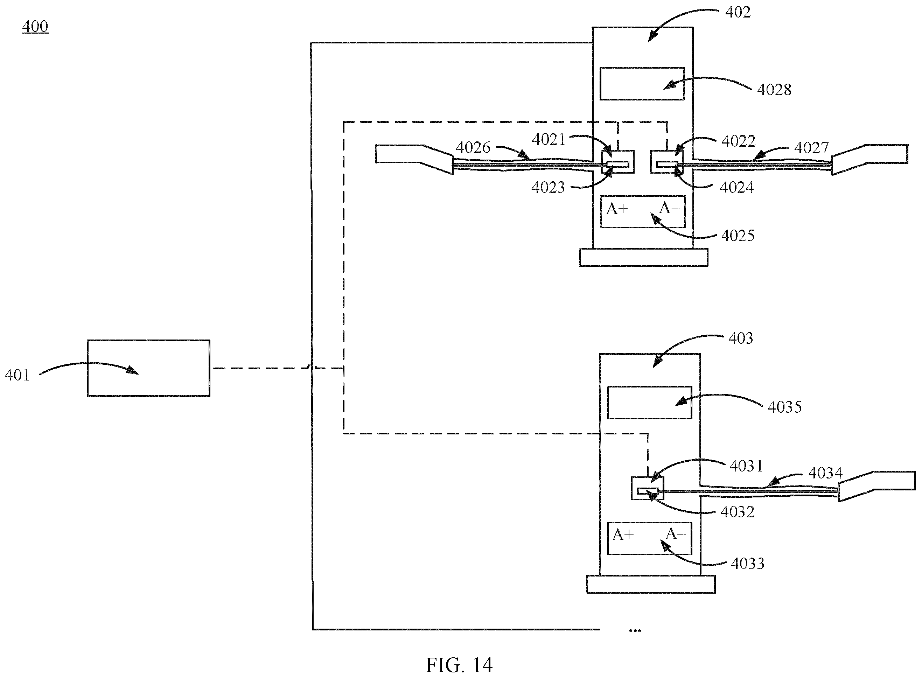

FIG. 14 is a schematic diagram 2 of a structure of a charging device according to an embodiment of this application;

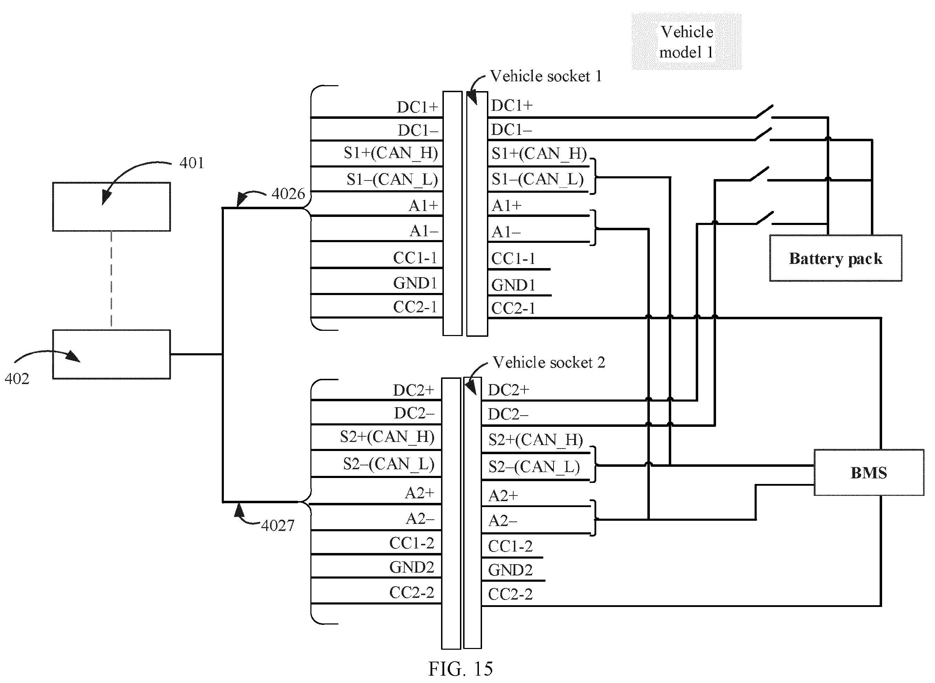

FIG. 15 is a schematic diagram 5 of an insertion interface between a charging interface of a charging device and a vehicle socket according to an embodiment of this application;

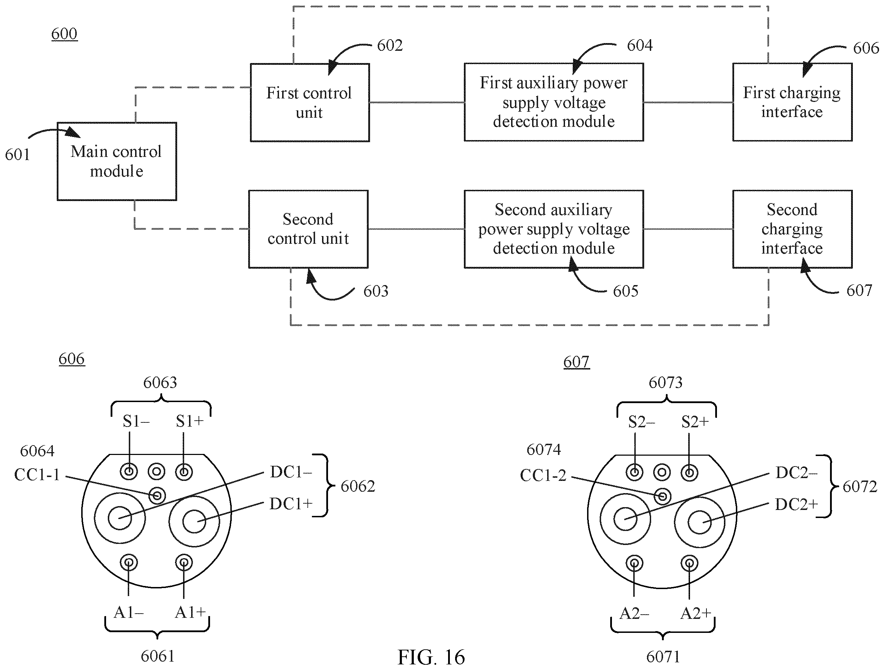

FIG. 16 is a schematic diagram 3 of a structure of a charging device according to an embodiment of this application;

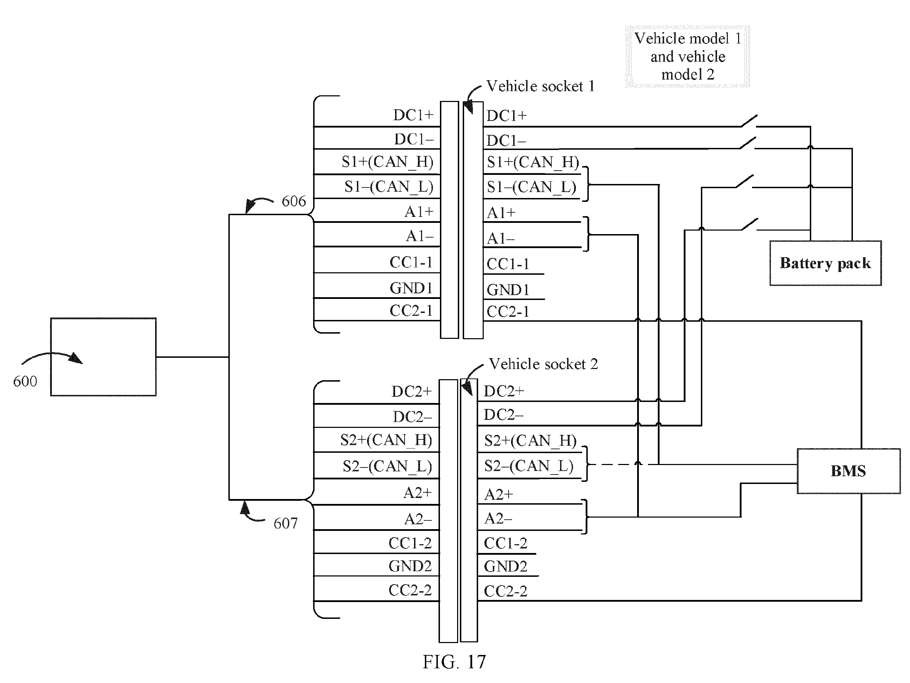

FIG. 17 is a schematic diagram 6 of an insertion interface between a charging interface of a charging device and a vehicle socket according to an embodiment of this application;

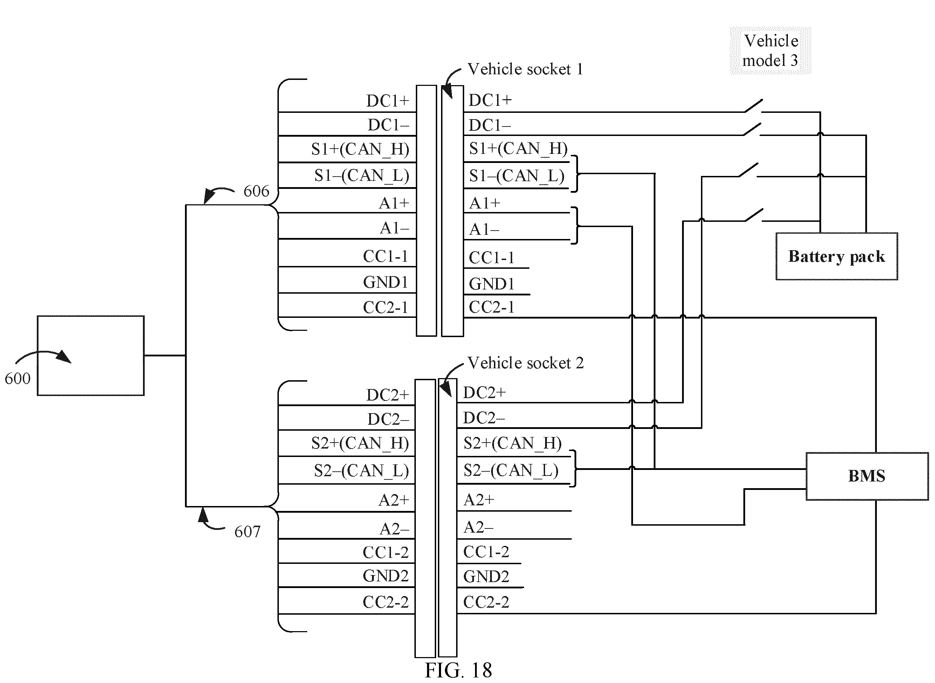

FIG. 18 is a schematic diagram 7 of an insertion interface between a charging interface of a charging device and a vehicle socket according to an embodiment of this application;

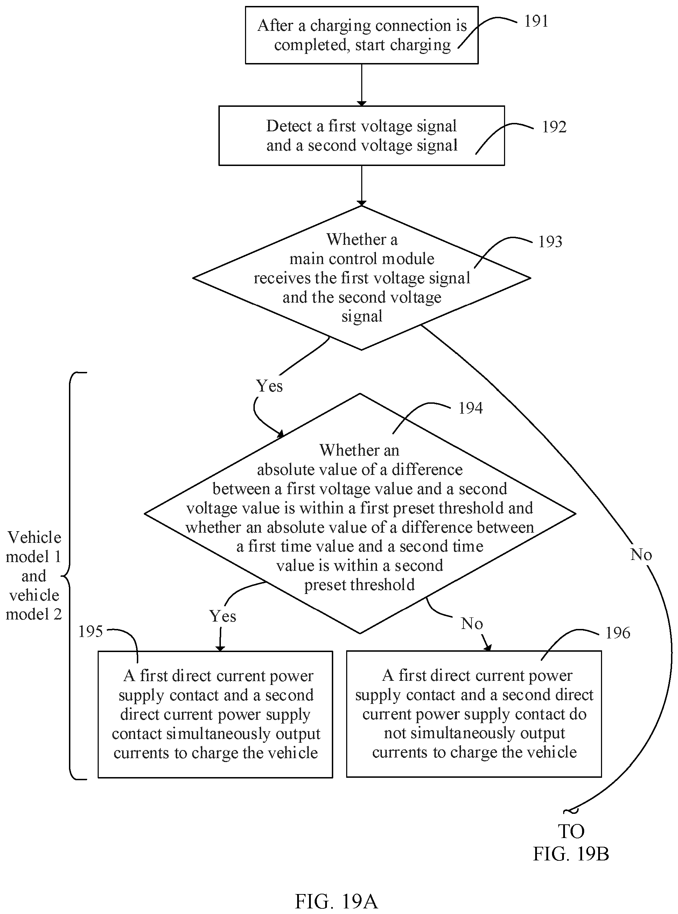

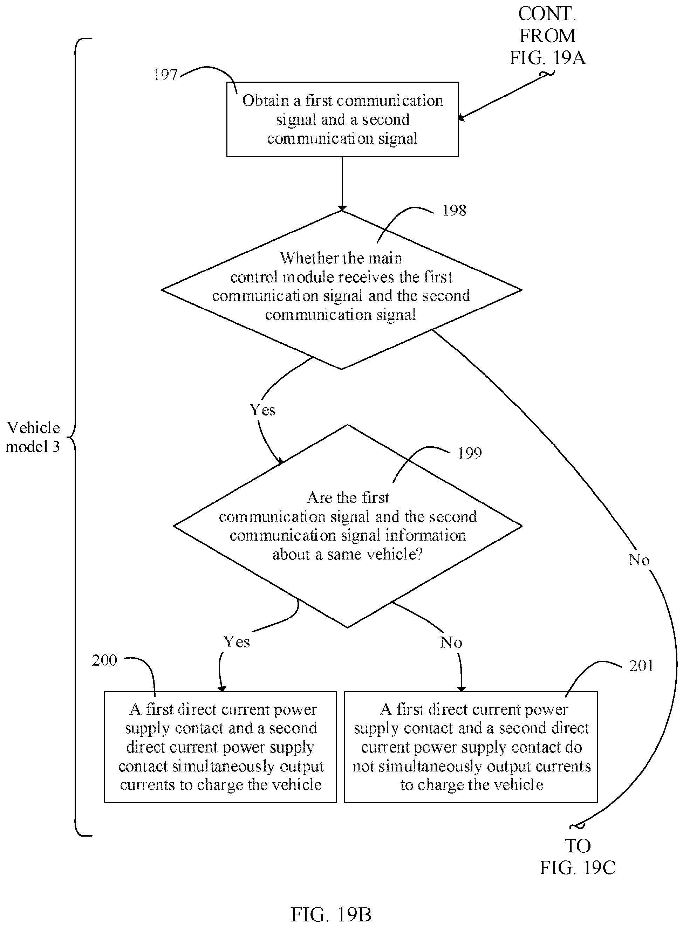

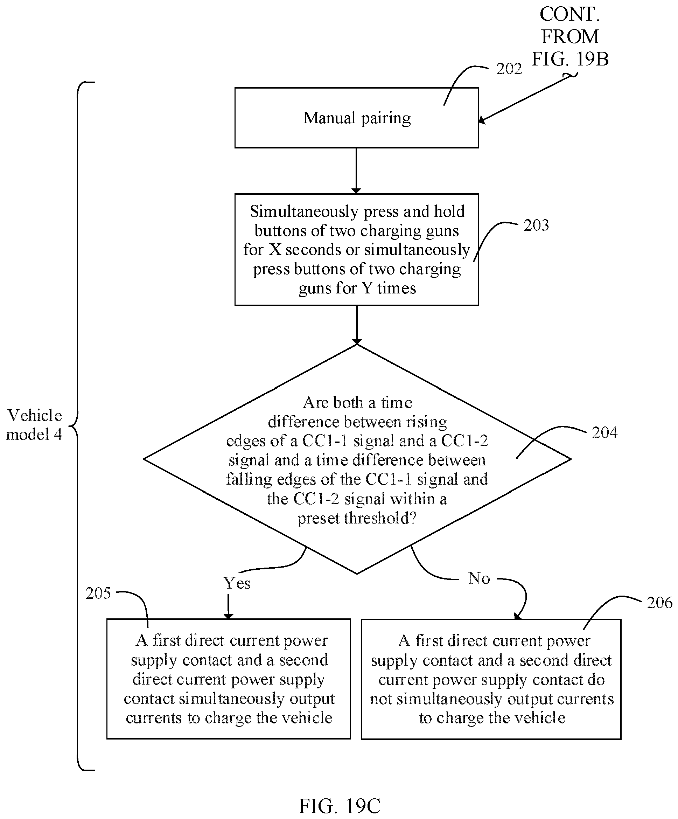

FIG. 19A, FIG. 19B, and FIG. 19C are a schematic flowchart 1 of a method for charging an electric vehicle by a charging device according to an embodiment of this application; and

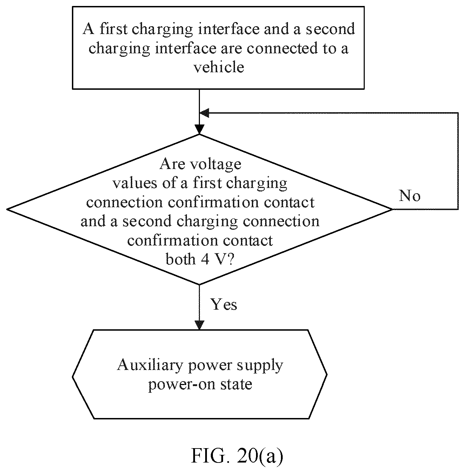

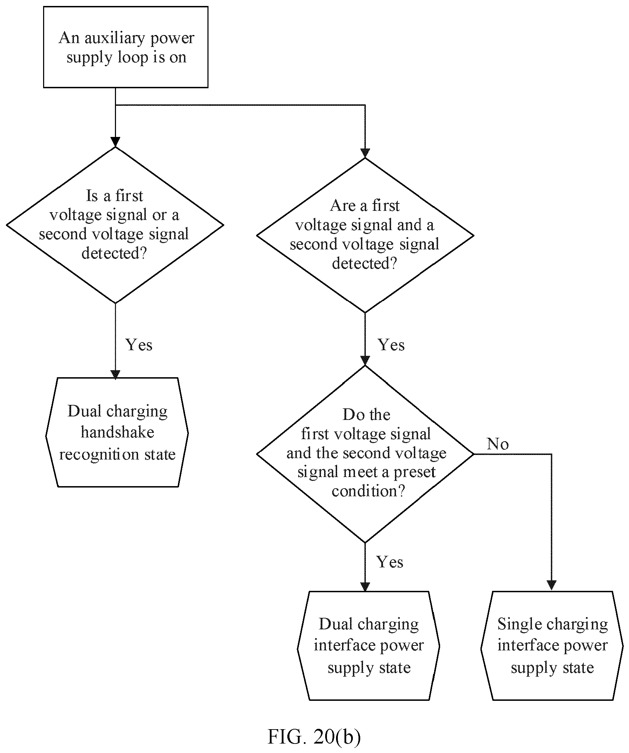

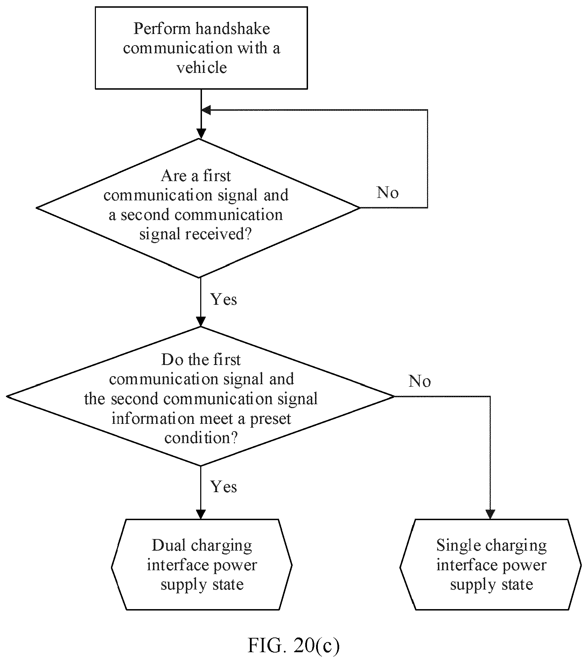

FIG. 20(a), FIG. 20(b), and FIG. 20 (c) are a schematic flowchart 2 of a method for charging an electric vehicle by a charging device according to an embodiment of this application.

### DESCRIPTION OF EMBODIMENTS

First, some terms in embodiments of this application are explained and described, to facilitate understanding of a person skilled in the art.

Connection: It should be understood in a broad sense. For example, if A is connected to B, A may be directly connected to B, or A may be indirectly connected to B by using an intermediate medium.

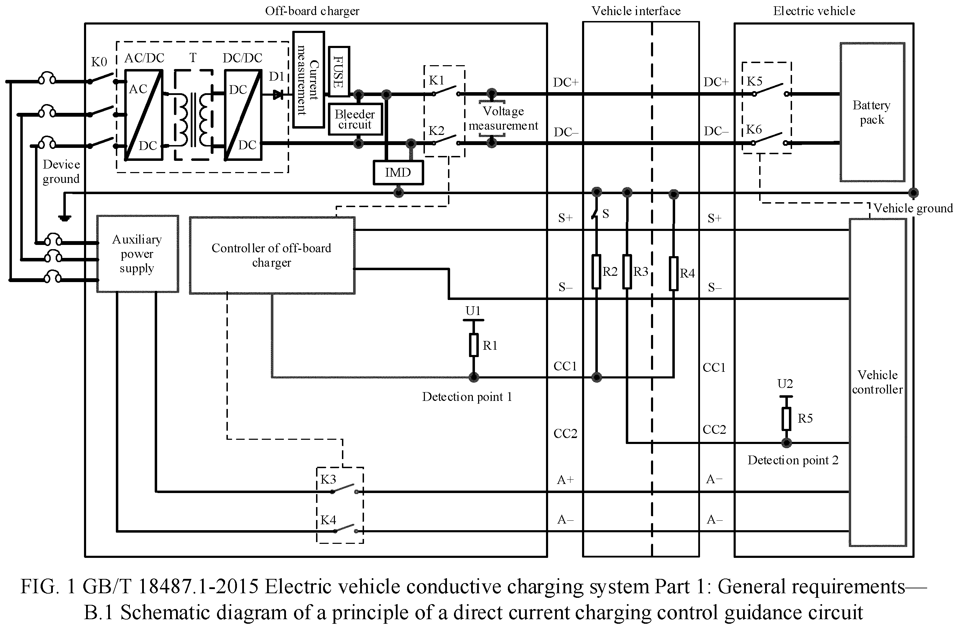

The terms "first", "second", and the like are merely intended for a purpose of description, and shall not be understood as an indication or implication of relative importance or implicit indication of a quantity of indicated technical features. Therefore, a feature limited by "first", "second", or the like may explicitly or implicitly include one or more features. For ease of understanding, content of a direct current charging control guidance circuit and a control principle in the Chinese national standard GB/T 18487.1-2015 and content of a communication protocol between a charger and a battery management system (BMS, Battery Management System) in the Chinese national standard GB/T 26930-2015 in this application are first described. (GB/T 26930-2015 specifies that the Controller Area Network 2.0B (CAN 2.0B, Controller Area Network 2.0B) communication protocol is used between an off-board conductive charger and a BMS). FIG. 1 is a schematic diagram of a principle of a direct current charging control guidance circuit in GB/T 18487.1-2015. The control guidance circuit is a circuit for signal transmission and communication between an electric vehicle and a charging pile. The direct current charging control guidance circuit mainly includes an off-board conductive charger (charging pile) controller, resistors R1, R2, R3, R4, and R5, a switch S, direct current power supply loop contactors K1 and K2, low-voltage auxiliary power supply loop contactors K3 and K4, charging loop contactors K5 and K6, and a vehicle controller. The vehicle controller may be integrated in a BMS, the resistors R2 and R3 are mounted on a vehicle plug, and the resistor R4 is mounted on a vehicle socket. In a whole charging process, the off-board conductive charger controller detects states of the contactors K1, K2, K3 and K4, and controls the contactors K1, K2, K3, and K4 to be on or off, and the vehicle controller of the electric vehicle detects states of the contactors K5 and K6 and controls the contactors K5 and K6 to be on or off.

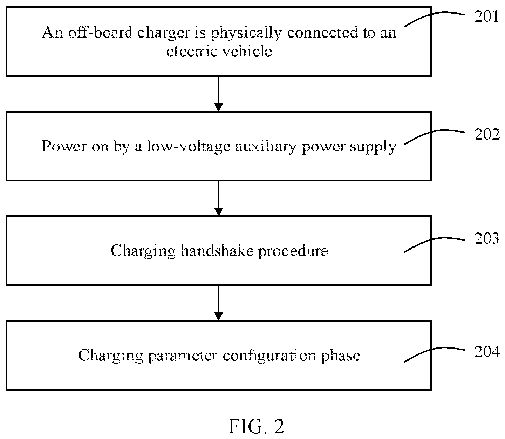

FIG. 2 is a flowchart of a charging preparation process of an off-board conductive charger. Before the off-board conductive charger starts charging an electric vehicle, the charging preparation process is mainly divided into the following four steps.

Step 201: An off-board conductive charger is physically connected to an electric vehicle, and then step 202 is performed.

A vehicle plug is inserted into a vehicle socket. In the insertion process, a voltage at a detection point 1 is from 6 V to 4 V, and a voltage at a detection point 2 is from 12 V to 6 V. When a controller of the off-board conductive charger measures that a voltage value at the detection point 1 is 4 V, it is determined that the vehicle plug is successfully inserted into the vehicle socket. In other words, when the controller of the off-board conductive charger measures that the voltage value at the detection point 1 is 4 V, it is determined that the off-board conductive charger is physically connected to the electric vehicle successfully.

When a vehicle controller of the electric vehicle measures that a voltage value at the detection point 2 is 6 V, it is determined that the vehicle plug is successfully inserted into the vehicle socket. In other words, when the vehicle controller of the electric vehicle measures that the voltage value at the detection point 2 is 6 V, it is determined that the off-board conductive charger is physically connected to the electric vehicle successfully.

Step 202: Power on by a low-voltage auxiliary power supply, and perform step 203.

After the controller of the off-board conductive charger determines that the off-board conductive charger is physically connected to the electric vehicle successfully, the controller of the off-board conductive charger sends a control instruction, to close the auxiliary power supply contactors K3 and K4, so that the low-voltage auxiliary power supply loop is on.

Step 203: Perform a charging handshake procedure, and perform step 204 after the charging handshake procedure is completed.

The charging handshake procedure is divided into a handshake start phase and a handshake recognition phase.

After the low-voltage auxiliary power supply loop is on, the charging handshake procedure is entered. In this procedure, the controller of the off-board conductive charger periodically sends a charger handshake message (CHM, Charger Handshake Message) to the on-board controller, to determine whether the controller of the off-board conductive charger and the on-board controller are in communication normally; and after receiving the CHM, the on-board controller periodically sends a vehicle handshake message (BHM, Battery Handshake Message) to the controller of the off-board conductive charger. The BHM includes information about an allowable charging voltage of a BMS.

After the controller of the off-board conductive charger receives the BHM, the off-board conductive charger starts to perform insulation detection. After the detection is completed, the handshake recognition phase is entered. In this phase, the controller of the off-board conductive charger stops sending the CHM and starts to periodically send a charger recognition message (CRM, Charger Recognition Message) to the on-board controller; and after receiving the CRM, the on-board controller periodically sends a vehicle recognition message (BRM, Battery Recognition Message) to the controller of the off-board conductive charger. The CRM is for the on-board controller to recognize the off-board conductive charger, and the CRM includes information about a number of the off-board conductive charger and the like. The BRM is for the controller of the off-board conductive charger to recognize vehicle information, and the BRM includes information about a vehicle battery type, a rated battery capacity, a rated battery voltage, a vehicle identification number (VIN, Vehicle Identification Number), and the like. For different electric vehicles, BRMs sent by on-board controllers of the electric vehicles are also different.

Step 204: Perform a charging parameter configuration phase, and enter a charging phase after the charging parameter configuration is completed.

After the charging handshake procedure is completed, the charging parameter configuration phase is entered. In this phase, the on-board controller periodically sends a power battery charging parameter (BCP, Power Battery Charging Parameters) message to the controller of the off-board conductive charger. The BCP message includes information about a maximum voltage, a maximum current, an allowable temperature, and the like of the vehicle battery. After receiving the BCP message, the controller of the off-board conductive charger determines whether the off-board conductive charger is suitable for charging the vehicle. If the off-board conductive charger is suitable for charging the vehicle, the controller of the off-board conductive charger periodically sends an off-board conductive charger maximum output capability (CML, Charger Maximum Lab) message to the on-board controller. The CML message includes information about a maximum output voltage, a maximum output current, a minimum output current, and the like of the off-board conductive charger. After receiving the CML message, the on-board controller determines whether the off-board conductive charger is suitable for charging the vehicle. If the off-board conductive charger is suitable for charging the vehicle, the on-board controller sends a control instruction to close the vehicle-side charging loop contactors K5 and K6. After K5 and K6 are closed, insulation detection is performed on the vehicle. After the detection is completed, the on-board controller sends a battery charging ready OK state (BRO, Battery Ready OK) message. After the controller of the off-board conductive charger receives the BRO message, the controller of the off-board conductive charger detects whether a battery voltage at the vehicle end is normal. If the battery voltage at the vehicle end is normal, the off-board conductive charger outputs a pre-charging voltage, and then closes the direct current power supply loop contactors K1 and K2 on the off-board conductive charger side. In this case, the charging loop is on, and the charging phase is entered.

It should be noted that a vehicle interface in FIG. 1 includes a vehicle plug and a vehicle socket. The vehicle socket is fixedly mounted on the electric vehicle and is connected to an on-board battery by using a cable. The vehicle plug is configured to be inserted into the vehicle socket. During actual application, the off-board conductive charger in FIG. 1 is usually a direct current charging pile, and the controller of the off-board conductive charger is located inside the direct current charging pile. The vehicle plug is a charging gun head and is configured to be inserted into the vehicle socket of the electric vehicle. The vehicle controller of the electric vehicle is usually a BMS.

The following explains key terms in this application.

Dual-gun simultaneous charging: Two charging guns are inserted into two vehicle sockets of a same electric vehicle, and simultaneously output currents to charge the vehicle to be charged.

Split-type charging device: One split-type charging device includes one charging host and a plurality of charging terminals. The charging host is configured to perform energy conversion and power allocation on a current outputted from a power grid side. The plurality of charging terminals are connected to the charging host and are configured to implement information exchange and energy transmission between the charging host and an electric vehicle.

This application provides a charging device and a dual-gun charging method of a charging device. The charging device provided in this application not only can match all vehicle models that support dual-gun simultaneous charging, but also needs no complex manual pairing operation in most scenarios when a user performs dual-gun simultaneous charging on an electric vehicle by using the charging device, which can reduce an operation procedure of the user and improve usage experience of the user.

The electric vehicle mentioned above may be a pure electric vehicle (Pure EV/Battery EV, Pure Electric Vehicle/Battery Electric Vehicle), a hybrid electric vehicle (HEV, Hybrid Electric Vehicle), a range extended electric vehicle (REEV, Range Extended Electric Vehicle), a plug-in hybrid electric vehicle (PHEV, Plug-in Hybrid Electric Vehicle), or another new energy vehicle. This is not limited herein.

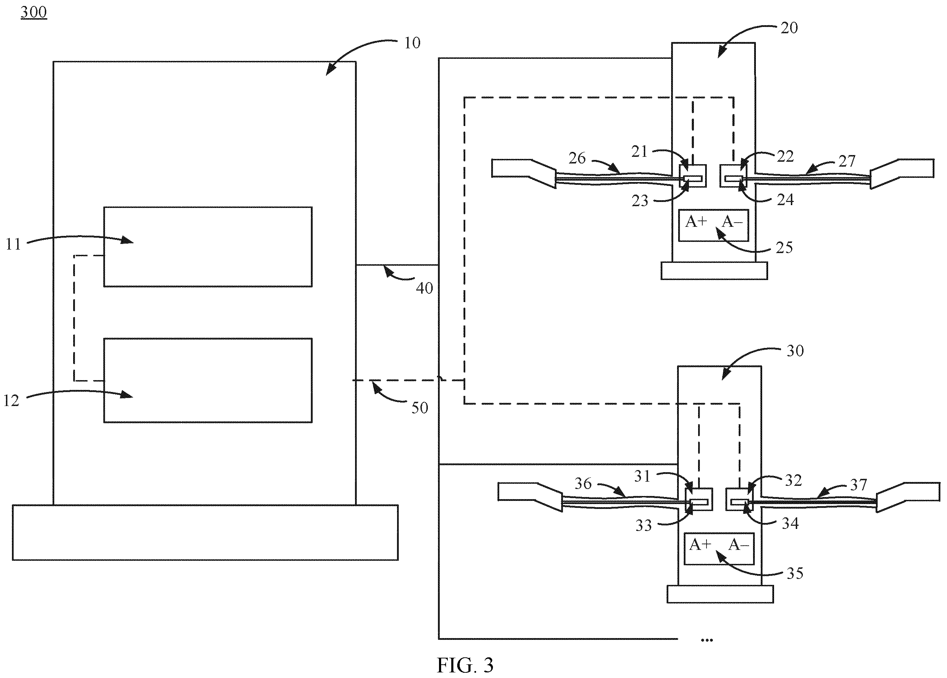

FIG. 3 shows a split-type charging device 300 according to an embodiment of this application. The split-type charging device 300 includes a charging host 10, a plurality of charging terminals 20 and 30, and the like. The charging host 10 includes a power supply module 11 and a main control module 12. The power supply module 11 is configured to convert an alternating current outputted from a power grid side into a direct current that matches vehicle charging information (including a charging voltage and a charging current that are allowed by a vehicle battery).

The charging terminal 20 is connected to the charging host 10 by using a power cable 40 and a communication cable 50, to implement energy transmission and information exchange between the charging terminal 20 and the charging host 10. Specifically, the charging terminal 20 includes a first control unit 21, a second control unit 22, a first auxiliary power supply voltage detection module 23, a second auxiliary power supply voltage detection module 24, a first auxiliary power supply 25, a first charging gun 26, and a second charging gun 27. Both the first control unit 21 and the second control unit 22 are connected to the main control module 12, and are configured to implement information exchange between the charging terminal 20 and the charging host 10. The first auxiliary power supply 25 is configured to supply power to a BMS of a vehicle after at least one of the first charging gun 26 and the second charging gun 27 is successfully inserted into a vehicle socket. The first auxiliary power supply voltage detection module 23 is separately connected to a gun head of the first charging gun 26 and the first control unit 21, and is configured to detect an auxiliary power supply voltage at an insertion point of the first charging gun 26 and the vehicle socket and send a detection result to the first control unit 21. The second auxiliary power supply voltage detection module 24 is separately connected to a gun head of the second charging gun 27 and the second control unit 22, and is configured to detect an auxiliary power supply voltage at an insertion point of the second charging gun 27 and the vehicle socket and send a detection result to the second control unit 22. Similarly, a structure of the charging terminal 30 is the same as that of the charging terminal 20, and details are not described herein again.

It should be noted that the first charging gun 26 may also be referred to as a first charging interface 26, and the second charging gun 27 may also be referred to as a second charging interface 27, which indicate a same physical entity.

In a possible implementation, the first auxiliary power supply voltage detection module 23 may be integrated in the first control unit 21, and the second auxiliary power supply voltage detection module 24 may be integrated in the second control unit 22.

It should be noted that the split-type charging device 300 may include a plurality of charging terminals, and a specific quantity is not limited. For ease of description, FIG. 3 is a schematic diagram of structures of the two charging terminals 20 and 30 and a connection between the two charging terminals and the charging host 10. A structure of another charging terminal that is not shown and a manner of interaction between the charging terminal and the charging host 10 are the same as those of the charging terminals 20 and 30.

During actual application, with reference to FIG. 2 and FIG. 3, using an example in which the first charging gun 26 is inserted into a vehicle, after the first charging gun 26 is successfully inserted into the vehicle, the first control unit 21 powers on the first auxiliary power supply 25. The first control unit 21 is in communication with a BMS of the vehicle to obtain charging information such as a battery capacity, a maximum battery voltage, and a maximum battery current of the vehicle. The first control unit 21 sends the received charging information to the main control module 12. After receiving the charging information of the vehicle, the main control module 12 controls the power supply module 11 to output a corresponding charging current. The charging current is transmitted to the first charging gun 26 through the power cable 40, to charge the vehicle.

In a possible implementation, the power supply module 11 includes a rectification module and a charging module. The rectification module is configured to convert an alternating current outputted from a power grid side into a first direct current. The first direct current outputted from the rectification module is inputted to the charging module through the cable. The charging module is configured to perform power conversion on the first direct current and output a second direct current. During specific implementation, the rectification module includes a plurality of AC-DC conversion units, the charging module includes a plurality of DC-DC conversion units, and an output end of a DC-DC conversion unit is connected to a switch. The main control module 12 is configured to receive charging information of a vehicle, and control, based on the charging information of the vehicle, different switches to be on or off, for output of different DC-DC conversion units in parallel, so that the power supply module 11 outputs a second direct current that matches the charging information of the vehicle.

It should be noted that an output end of one DC-DC conversion unit is connected to at least one switch.

In another possible implementation, the power supply module 11 includes a rectification module. The rectification module includes a plurality of AC-DC conversion units, and an output end of an AC-DC conversion unit is connected to a switch. The main control module 12 controls, based on charging information of a vehicle, different switches to be on or off, for output of different AC-DC conversion units in parallel, so that the power supply module 11 outputs a second direct current that matches the charging information of the vehicle.

It should be noted that an output end of one AC-DC conversion unit is connected to at least one switch.

The following describes in detail a principle of dual-gun simultaneous charging of the split-type charging device 300. With reference to FIG. 4, (a) in FIG. 4 is a schematic diagram of a contact of a direct current charging vehicle plug (charging gun head) in the Chinese national standard GB/T 20234.3-2015, (b) in FIG. 4 is a schematic diagram of a contact of a direct current charging vehicle socket in the Chinese national standard GB/T 20234.3-2015, and (c) in FIG. 4 is a diagram of a connection relationship between a contact of a vehicle socket and a battery pack of a vehicle and a connection relationship between the contact of the vehicle socket and a BMS of the vehicle. As shown in (c) in FIG. 4, DC+ and DC- respectively represent a positive electrode and a negative electrode of a direct current power supply, DC+ is connected to a positive electrode of the battery pack, and DC- is connected to a negative electrode of the battery pack. S+ and S- respectively represent CAN_H and CAN_L for charging communication, which are communication lines that connect the BMS and a charging pile. CC1 is connected to a charging pile side, a CC1 signal is corresponding to a voltage change signal at the detection point 1 in FIG. 1, and the charging pile determines, by detecting the CC1 signal at the contact, whether the charging gun is successfully inserted into the vehicle. CC2 is connected to the BMS on the vehicle side, a CC2 signal is corresponding to a voltage change signal at the detection point 2 in FIG. 1, and the BMS determines, by detecting the CC2 signal at the contact, whether the charging gun is successfully inserted into the vehicle. A+ and A- respectively represent a positive electrode and a negative electrode of an auxiliary power supply, which are connected to the BMS to supply power to the BMS. After the contact of the charging gun head is coupled to the contact of the vehicle socket, a charging connection and a communication connection are established between the charging pile and the electric vehicle by using a control guidance circuit (as shown in FIG. 1). The split-type charging device 300 provided in this application complies with the Chinese national standard, and the charging gun connected to the charging terminals 20 and 30 complies with the definition in the Chinese national standard GB/T 20234.3-2015.

For ease of description, a contact of the gun head of the first charging gun 26 is defined as a first auxiliary power supply contact (A+, A-), a first direct current power supply contact (DC+, DC-), a first communication contact (S+, S-), and a first charging connection confirmation contact (CC1); and a contact of the gun head of the second charging gun 27 is defined as a second auxiliary power supply contact (A+, A-), a second direct current power supply contact (DC+, DC-), a second communication contact (S+, S-), and a second charging connection confirmation contact (CC1). When an electric vehicle has two vehicle sockets, according to a manner of a connection between a BMS and A+, A-on the two vehicle sockets and a connection between the BMS and S+, S- on the two vehicle sockets, the electric vehicle that supports dual-gun simultaneous charging may be classified into four vehicle models:
Vehicle model 1: On two vehicle sockets, A+ and A- are connected in parallel, and S+ and S- are connected in parallel.
Vehicle model 2: On two vehicle sockets, A+ and A- are connected in parallel, S+ and S- are not connected in parallel, and the two vehicle sockets are respectively marked as a main socket and an auxiliary socket on the vehicle.
Vehicle model 3: On two vehicle sockets, S+ and S- are connected in parallel, A+ and A- are not connected in parallel, and the two vehicle sockets are respectively marked as a main socket and an auxiliary socket on the vehicle.
Vehicle model 4: On two vehicle sockets, S+ and S- are not connected in parallel, A+ and A- are not connected in parallel, and the two vehicle sockets are respectively marked as a main socket and an auxiliary socket on the vehicle.

A dual-gun charging procedure for the vehicle model 1 is described as follows.

Using an example in which the first charging gun 26 and the second charging gun 27 that are connected to the charging terminal 20 are inserted into vehicle sockets, with reference to FIG. 1, FIG. 3, FIG. 4, and FIG. 5, the dual-gun charging procedure of the split-type charging device 300 for the vehicle model 1 is described. FIG. 5 is a schematic diagram of an insertion interface between charging guns and vehicle sockets of the vehicle model 1. On the two vehicle sockets of the vehicle model 1, A1+ is connected to A2+, A1- is connected to A2-, S1+ is connected to S2+, and S1- is connected to S2-.

The first charging gun 26 is inserted into the vehicle socket 1, and the second charging gun 27 is inserted into the vehicle socket 2. The first control unit 21 detects whether the first charging gun 26 is successfully inserted into the vehicle socket 1, and the second control unit 22 detects whether the second charging gun 27 is successfully inserted into the vehicle socket 2. When detecting that a voltage of the first charging connection confirmation contact is 4 V, the first control unit 21 determines that the first charging gun 26 is successfully inserted into the vehicle socket 1. Similarly, when detecting that a voltage of the second charging connection confirmation contact is 4 V, the second control unit 22 determines that the second charging gun 27 is successfully inserted into the vehicle socket 2. The first control unit 21 and the second control unit 22 respectively send, to the main control module 12, signals indicating that the first charging gun 26 and the second charging gun 27 are successfully inserted into the vehicle sockets.

After the first charging gun 26 and the second charging gun 27 are respectively inserted into the vehicle socket 1 and the vehicle socket 2, a user starts charging. After the first control unit 21 receives a charging start signal, the first control unit 21 enables an auxiliary power supply loop between the first auxiliary power supply 25 and the vehicle socket 1 to be on. In this case, the first auxiliary power supply contact is connected to A1+ and A1- of the vehicle socket 1, so that the first auxiliary power supply 25 is connected to a BMS. After the auxiliary power supply loop between the first auxiliary power supply 25 and the vehicle socket 1 is on, the charging device 300 detects a first voltage signal of the first auxiliary power supply contact. The first voltage signal includes a first voltage value and a first time value. The first voltage value is a voltage value of the first auxiliary power supply contact, and the first time value is time at which the charging device 300 obtains the first voltage value.

Specifically, the first auxiliary power supply voltage detection module 23 detects the first voltage value U1 of the first auxiliary power supply contact, and sends U1 to the first control unit 21. After receiving U1, the first control unit 21 records time T1 at which U1 is received, and sends U1 and T1 to the main control module 12.

In a possible implementation, the user may scan a two-dimensional code on the first charging gun 26 or the second charging gun 27 to start charging.

In a possible implementation, the user may select the first charging gun 26 or the second charging gun 27 on a human-computer interaction interface of the charging terminal 20 to start charging.

In a possible implementation, the user may use a charging APP or a charging mini program to start charging.

A method for starting charging by a user is not limited in this application. For ease of description, this embodiment of this application is described in detail by using an example in which the user scans a two-dimensional code on the first charging gun 26 or the second charging gun 27 to start charging.

Refer to FIG. 5. After the auxiliary power supply loop between the first auxiliary power supply 25 and the vehicle socket 1 is on, A1+ and A1- of the vehicle socket 1 are powered on. Because A1+ and A1- of the vehicle socket 1 are connected in parallel to A2+ and A2- of the vehicle socket 2, A2+ and A2- of the vehicle socket 2 are also powered on almost at the same time. Therefore, there is an open-circuit voltage between A2+ and A2- of the vehicle socket 2, and a value of the open-circuit voltage is approximately equal to a value of U1.

The charging device 300 detects a second voltage signal of the second auxiliary power supply contact. The second voltage signal includes a second voltage value and a second time value. The second voltage value is a voltage value of the second auxiliary power supply contact, and the second time value is time at which the charging device obtains the second voltage value.

Specifically, the second auxiliary power supply voltage detection module 24 detects the second voltage value U2 of the second auxiliary power supply contact, and sends U2 to the second control unit 22. After receiving U2, the second control unit 22 records time T2 at which U2 is received, and sends U2 and T2 to the main control module 12.

The charging device 300 determines, based on the first voltage signal and the second voltage signal, whether to enable the first direct current power supply contact and the second direct current power supply contact to simultaneously output currents to charge the vehicle.

After receiving U1 and T1 sent by the first control unit 21 and U2 and T2 sent by the second control unit 22, the main control module 12 determines whether the first charging gun 26 and the second charging gun 27 are connected to a same vehicle. Specifically, in a case that an absolute value of a difference between U1 and U2 is within a first preset threshold, and an absolute value of a difference between T1 and T2 is within a second preset threshold, the charging device 300 enables the first direct current power supply contact and the second direct current power supply contact to simultaneously output currents to charge the vehicle.

For ease of description, the following uses |U2-U1| to represent the absolute value of the difference between U2 and U1, and uses |T2-T1| to represent the absolute value of the difference between T2 and T1.

In a possible implementation, in response to |U2-U1| ≤ 2 V and |T2-T1| ≤ 1s, the main control module 12 determines that the first charging gun 26 and the second charging gun 27 are connected to a same vehicle.

In a possible implementation, in response to |U2-U1| ≤ 2 V and |T2-T1| ≤ 1.5s, the main control module 12 determines that the first charging gun 26 and the second charging gun 27 are connected to a same vehicle.

The main control module 12 marks the first charging gun 26 as a gun 1#, and marks the second charging gun 27 as a gun 2#. For ease of description, in this embodiment of this specification, the gun 1# represents a main gun, and the gun 2# represents an auxiliary gun. In a subsequent charging procedure, a communication line on the charging gun corresponding to the main gun is responsible for communication with the vehicle, to obtain charging requirement information of the vehicle.

During actual application, the charging device 300 further includes a power supply module 11. The power supply module 11 is configured to convert an alternating current outputted from a power grid side into a direct current, so that the first direct current power supply contact or the second direct current power supply contact outputs a current to charge the vehicle.

In a subsequent charging procedure, the first control unit 21 corresponding to the first charging gun 26 is in communication with the BMS of the vehicle, obtains the charging requirement information of the vehicle, and sends the obtained charging requirement information to the main control module 12. The main control module 12 allocates output voltages and output currents of the first charging gun 26 and the second charging gun 27 based on the obtained charging requirement information. The main control module 12 sends a charging signal to the power supply module 11. After receiving the signal, the power supply module 11 outputs corresponding charging voltages and charging currents to the first charging gun 26 and the second charging gun 27, so that the first charging gun 26 and the second charging gun 27 charge a same vehicle simultaneously.

A dual-gun charging procedure for the vehicle model 2 is described as follows.

Using an example in which the first charging gun 26 and the second charging gun 27 that are connected to the charging terminal 20 are inserted into vehicle sockets, with reference to FIG. 1, FIG. 3, FIG. 4, and FIG. 6, the dual-gun charging procedure of the split-type charging device 300 for the vehicle model 2 is described. FIG. 6 is a schematic diagram of an insertion interface between charging guns and vehicle sockets of the vehicle model 2.

As shown in FIG. 6, on the two vehicle sockets, A1+ is connected to A2+, and A1- is connected to A2-; S1+ and S1-of the vehicle socket 1 are connected to a BMS, and the vehicle socket 1 is a main vehicle socket; and S2+ and S2-of the vehicle socket 2 are not connected to the BMS and are in a floating state, and the vehicle socket 2 is an auxiliary vehicle socket.

The first charging gun 26 is inserted into the vehicle socket 1, and the second charging gun 27 is inserted into the vehicle socket 2. The first control unit 21 detects whether the first charging gun 26 is successfully inserted into the vehicle socket 1, and the second control unit 22 detects whether the second charging gun 27 is successfully inserted into the vehicle socket 2. When detecting that a voltage of the first charging connection confirmation contact is 4 V, the first control unit 21 determines that the first charging gun 26 is successfully inserted into the vehicle socket 1. Similarly, when detecting that a voltage of the second charging connection confirmation contact is 4 V, the second control unit 22 determines that the second charging gun 27 is successfully inserted into the vehicle socket 2. The first control unit 21 and the second control unit 22 respectively send, to the main control module 12, signals indicating that the first charging gun 26 and the second charging gun 27 are successfully inserted into the vehicle sockets.

The user scans a two-dimensional code on the first charging gun 26, that is, a charging gun inserted into the main vehicle socket to start charging. After the first control unit 21 receives a charging start signal, the first control unit 21 enables an auxiliary power supply loop between the first auxiliary power supply 25 and the vehicle socket 1 to be on. In this case, the first auxiliary power supply contact is connected to A1+ and A1- of the vehicle socket 1, so that the first auxiliary power supply 25 is connected to a BMS. After the auxiliary power supply loop between the first auxiliary power supply 25 and the vehicle socket 1 is on, the charging device 300 detects a first voltage signal of the first auxiliary power supply contact. The first voltage signal includes a first voltage value and a first time value. The first voltage value is a voltage value of the first auxiliary power supply contact, and the first time value is time at which the charging device 300 obtains the first voltage value.

Specifically, the first auxiliary power supply voltage detection module 23 detects the first voltage value U1 of the first auxiliary power supply contact, and sends U1 to the first control unit 21. After receiving U1, the first control unit 21 records time T1 at which U1 is received, and sends U1 and T1 to the main control module 12.

In a possible implementation, the user may scan a two-dimensional code on the first charging gun 26 to start charging. In a possible implementation, the user may select the first charging gun 26 on a human-computer interaction interface of the charging terminal 20 to start charging.

In a possible implementation, the user may use a charging APP or a charging mini program to start charging.

A method for starting charging by a user is not limited in this application. For ease of description, this embodiment of this application is described in detail by using an example in which the user scans a two-dimensional code on the first charging gun 26 to start charging.

Refer to FIG. 6. After the auxiliary power supply loop between the first auxiliary power supply 25 and the vehicle socket 1 is on, A1+ and A1- of the vehicle socket 1 are powered on. Because A1+ and A1- of the vehicle socket 1 are connected in parallel to A2+ and A2- of the vehicle socket 2, A2+ and A2- of the vehicle socket 2 are also powered on almost at the same time. Therefore, there is an open-circuit voltage between A2+ and A2- of the vehicle socket 2, and a value of the open-circuit voltage is approximately equal to a value of U1.

The charging device 300 detects a second voltage signal of the second auxiliary power supply contact. The second voltage signal includes a second voltage value and a second time value. The second voltage value is a voltage value of the second auxiliary power supply contact, and the second time value is time at which the charging device obtains the second voltage value.

Specifically, the second auxiliary power supply voltage detection module 24 detects the second voltage value U2 of the second auxiliary power supply contact, and sends U2 to the second control unit 22. After receiving U2, the second control unit 22 records time T2 at which U2 is received, and sends U2 and T2 to the main control module 12.

The charging device 300 determines, based on the first voltage signal and the second voltage signal, whether to enable the first direct current power supply contact and the second direct current power supply contact to simultaneously output currents to charge the vehicle.

After receiving U1 and T1 sent by the first control unit 21 and U2 and T2 sent by the second control unit 22, the main control module 12 determines whether the first charging gun 26 and the second charging gun 27 are connected to a same vehicle. Specifically, in a case that an absolute value of a difference between U1 and U2 is within a first preset threshold, and an absolute value of a difference between T1 and T2 is within a second preset threshold, the charging device 300 enables the first direct current power supply contact and the second direct current power supply contact to simultaneously output currents to charge the vehicle.

In a possible implementation, in response to |U2-U1| ≤ 2 V and |T2-T1| ≤ 1s, the main control module 12 determines that the first charging gun 26 and the second charging gun 27 are connected to a same vehicle.

In a possible implementation, in response to |U2-U1| ≤ 2 V and |T2-T1| ≤ 1.5s, the main control module 12 determines that the first charging gun 26 and the second charging gun 27 are connected to a same vehicle.

The main control module 12 marks the first charging gun 26 as a gun 1#, and marks the second charging gun 27 as a gun 2#.

During actual application, the charging device 300 further includes a power supply module 11. The power supply module 11 is configured to convert an alternating current outputted from a power grid side into a direct current, so that the first direct current power supply contact or the second direct current power supply contact outputs a current to charge the vehicle.

In a subsequent charging procedure, the first control unit 21 corresponding to the first charging gun 26 is in communication with the BMS of the vehicle, obtains the charging requirement information of the vehicle, and sends the obtained charging requirement information to the main control module 12. The main control module 12 allocates output voltages and output currents of the first charging gun 26 and the second charging gun 27 based on the obtained charging requirement information. The main control module 12 sends a charging signal to the power supply module 11. After receiving the signal, the power supply module 11 outputs corresponding charging voltages and charging currents to the first charging gun 26 and the second charging gun 27, so that the first charging gun 26 and the second charging gun 27 charge a same vehicle simultaneously.

A dual-gun charging procedure for the vehicle model 3 is described as follows.

Using an example in which the first charging gun 26 and the second charging gun 27 that are connected to the charging terminal 20 are inserted into vehicle sockets, with reference to FIG. 1, FIG. 3, FIG. 4, and FIG. 7, the dual-gun charging procedure of the split-type charging device 300 for the vehicle model 3 is described. FIG. 7 is a schematic diagram of an insertion interface between charging guns and vehicle sockets of the vehicle model 3.

As shown in FIG. 7, on the two vehicle sockets, S1+ is connected to S2+, and S1- is connected to S2-; A1+ and A1-of the vehicle socket 1 are connected to a BMS, and the vehicle socket 1 is a main vehicle socket; and A2+ and A2-of the vehicle socket 2 are not connected to the BMS and are in a floating state, and the vehicle socket 2 is an auxiliary vehicle socket.

The first charging gun 26 is inserted into the vehicle socket 1, and the second charging gun 27 is inserted into the vehicle socket 2. The first control unit 21 detects whether the first charging gun 26 is successfully inserted into the vehicle socket 1, and the second control unit 22 detects whether the second charging gun 27 is successfully inserted into the vehicle socket 2. When detecting that a voltage of the first charging connection confirmation contact is 4 V, the first control unit 21 determines that the first charging gun 26 is successfully inserted into the vehicle socket 1. Similarly, when detecting that a voltage of the second charging connection confirmation contact is 4 V, the second control unit 22 determines that the second charging gun 27 is successfully inserted into the vehicle socket 2. The first control unit 21 and the second control unit 22 respectively send, to the main control module 12, signals indicating that the first charging gun 26 and the second charging gun 27 are successfully inserted into the vehicle sockets.

The user scans a two-dimensional code on the first charging gun 26, that is, a charging gun inserted into the main vehicle socket to start charging. After the first control unit 21 receives a charging start signal, the first control unit 21 enables an auxiliary power supply loop between the first auxiliary power supply 25 and the vehicle socket 1 to be on. In this case, the first auxiliary power supply contact is connected to A1+ and A1- of the vehicle socket 1, so that the first auxiliary power supply 25 is connected to a BMS. After the auxiliary power supply loop between the first auxiliary power supply 25 and the vehicle socket 1 is on, the charging device 300 detects a first voltage signal of the first auxiliary power supply contact. The first voltage signal includes a first voltage value and a first time value. The first voltage value is a voltage value of the first auxiliary power supply contact, and the first time value is time at which the charging device 300 obtains the first voltage value.

Specifically, the first auxiliary power supply voltage detection module 23 detects the first voltage value U1 of the first auxiliary power supply contact, and sends U1 to the first control unit 21. After receiving U1, the first control unit 21 records time T1 at which U1 is received, and sends U1 and T1 to the main control module 12.

In a possible implementation, the user may scan a two-dimensional code on the first charging gun 26 to start charging. In a possible implementation, the user may select the first charging gun 26 on a human-computer interaction interface of the charging terminal 20 to start charging.

In a possible implementation, the user may use a charging APP or a charging mini program to start charging.

A method for starting charging by a user is not limited in this application. For ease of description, this embodiment of this application is described in detail by using an example in which the user scans a two-dimensional code on the first charging gun 26 to start charging.

Because A2+ and A2- of the vehicle socket 2 are floating and not connected to the BMS, and the auxiliary power supply loop between the first auxiliary power supply 25 and the vehicle socket 2 is not on, the second auxiliary power supply voltage detection module 24 cannot detect a voltage of the second auxiliary power supply contact. In other words, the main control module 12 cannot obtain a second voltage signal of the second auxiliary power supply contact, and therefore cannot determine, by comparing the first voltage signal with the second voltage signal, whether the first charging gun 26 and the second charging gun 27 are inserted into a same vehicle.

Specifically, after the main control module 12 receives U1 and T1 sent by the first control unit 21, if U2 and T2 sent by the second control unit 22 are not received within preset time, the main control module 12 determines that timeout occurs.

In a possible implementation, after the main control module 12 receives U1 and T1 sent by the first control unit 21, if U2 and T2 sent by the second control unit 22 are not received within 10 seconds, the main control module 12 determines that timeout occurs.

In a case that the main control module 12 obtains the first voltage signal, the charging device 300 obtains a first communication signal of a first communication contact and a second communication signal of a second communication contact, and determines, based on the first communication signal and the second communication signal, whether to enable the first charging gun 26 and the second charging gun 27 to simultaneously output currents to charge the vehicle.

The first communication signal includes first charging information, and the first charging information includes a first vehicle handshake message and a first vehicle recognition message. The second communication signal includes second charging information, and the second charging information includes a second vehicle handshake message and a second vehicle recognition message.

Specifically, the first control unit 21 establishes a communication connection with the BMS of the vehicle by using the first communication contact, to be in communication with the BMS of the vehicle. The first control unit 21 sends a CHM and a CRM to the BMS. After receiving the CHM and the CRM, the BMS sends a BHM and a BRM of the vehicle to the first control unit 21 by using the first communication contact. The first control unit 21 sends the received BHM and BRM to the main control module 12. In addition, S2+ and S2- of the vehicle socket 2 are connected in parallel to S1+ and S1- of the vehicle socket 1. Therefore, the BHM and the BRM of the vehicle that are sent by the BMS may be transmitted to the second control unit 22 through a communication cable between the BMS and the second control unit. In other words, the second control unit 22 may obtain the BHM and the BRM of the vehicle by using the second communication contact. After obtaining the BHM and the BRM of the vehicle, the second control unit 22 sends the BHM and the BRM to the main control module 12. After receiving the BHM and the BRM that are sent by the first control unit 21 and the BHM and the BRM that are sent by the second control unit 22, the main control module 12 determines, based on the BHM and the BRM that are sent by the first control unit 21 and the BHM and the BRM that are sent by the second control unit 22, whether to enable the first direct current power supply contact and the second direct current power supply contact to simultaneously output currents to charge the vehicle.

A BHM includes information about an allowable charging voltage of the BMS, and a BRM includes information about a vehicle battery type, a rated battery capacity, a rated battery voltage, and a vehicle identification number (VIN, Vehicle Identification Number).

In a possible implementation, the main control module 12 determines, based on the information about the allowable charging voltage, the vehicle battery type, the rated battery capacity, and the rated battery voltage that is included in the BHM and the BRM, whether the first charging gun 26 and the second charging gun 27 are connected to a same vehicle. Specifically, if the information about the allowable charging voltage, the vehicle battery type, the rated battery capacity, and the rated battery voltage that is included in the BHM and the BRM that are sent by the first control unit 21 is the same as the information about the allowable charging voltage, the vehicle battery type, the rated battery capacity, and the rated battery voltage that is included in the BHM and the BRM that are sent by the second control unit 22, the main control module 12 determines that the first charging gun 26 and the second charging gun 27 are connected to the same vehicle.

In a possible implementation, the main control module 12 determines, based on the vehicle identification number VIN, whether the first charging gun 26 and the second charging gun 27 are connected to a same vehicle. Specifically, if the VIN included in the BHM and the BRM that are sent by the first control unit 21 is the same as the VIN included in the BHM and the BRM that are sent by the second control unit 22, the main control module 12 determines that the first charging gun 26 and the second charging gun 27 are connected to the same vehicle.

The main control module 12 marks the first charging gun 26 as a gun 1#, and marks the second charging gun 27 as a gun 2#.

During actual application, the charging device 300 further includes a power supply module 11. The power supply module 11 is configured to convert an alternating current outputted from a power grid side into a direct current, so that the first direct current power supply contact or the second direct current power supply contact outputs a current to charge the vehicle.

In a subsequent charging procedure, the first control unit 21 corresponding to the first charging gun 26 is in communication with the BMS of the vehicle, obtains the charging requirement information of the vehicle, and sends the obtained charging requirement information to the main control module 12. The main control module 12 allocates output voltages and output currents of the first charging gun 26 and the second charging gun 27 based on the obtained charging requirement information. The main control module 12 sends a charging signal to the power supply module 11. After receiving the signal, the power supply module 11 outputs corresponding charging voltages and charging currents to the first charging gun 26 and the second charging gun 27, so that the first charging gun 26 and the second charging gun 27 charge a same vehicle simultaneously.

A dual-gun charging procedure for the vehicle model 4 is described as follows.

Using an example in which the first charging gun 26 and the second charging gun 27 that are connected to the charging terminal 20 are inserted into vehicle sockets, with reference to FIG. 1, FIG. 3, FIG. 4, and FIG. 8, the dual-gun charging procedure of the split-type charging device 300 for the vehicle model 4 is described. FIG. 8 is a schematic diagram of an insertion interface between charging guns and vehicle sockets of the vehicle model 4.

As shown in FIG. 8, A1+, A1-, S1+, and S1- of the vehicle socket 1 are connected to a BMS, and the vehicle socket 1 is a main vehicle socket; and A2+, A2-, S2+, and S2- of the vehicle socket 2 are not connected to the BMS and are in a floating state, and the vehicle socket 2 is an auxiliary vehicle socket.

The first charging gun 26 is inserted into the vehicle socket 1, and the second charging gun 27 is inserted into the vehicle socket 2. The first control unit 21 detects whether the first charging gun 26 is successfully inserted into the vehicle socket 1, and the second control unit 22 detects whether the second charging gun 27 is successfully inserted into the vehicle socket 2. When detecting that a voltage of the first charging connection confirmation contact is 4 V, the first control unit 21 determines that the first charging gun 26 is successfully inserted into the vehicle socket 1. Similarly, when detecting that a voltage of the second charging connection confirmation contact is 4 V, the second control unit 22 determines that the second charging gun 27 is successfully inserted into the vehicle socket 2. The first control unit 21 and the second control unit 22 respectively send, to the main control module 12, signals indicating that the first charging gun 26 and the second charging gun 27 are successfully inserted into the vehicle sockets.

The user scans a two-dimensional code on the first charging gun 26, that is, a charging gun inserted into the main vehicle socket to start charging. After the first control unit 21 receives a charging start signal, the first control unit 21 enables an auxiliary power supply loop between the first auxiliary power supply 25 and the vehicle socket 1 to be on. In this case, the first auxiliary power supply contact is connected to A1+ and A1- of the vehicle socket 1, so that the first auxiliary power supply 25 is connected to a BMS. After the auxiliary power supply loop between the first auxiliary power supply 25 and the vehicle socket 1 is on, the charging device 300 detects a first voltage signal of the first auxiliary power supply contact. The first voltage signal includes a first voltage value and a first time value. The first voltage value is a voltage value of the first auxiliary power supply contact, and the first time value is time at which the charging device 300 obtains the first voltage value.

Specifically, the first auxiliary power supply voltage detection module 23 detects the first voltage value U1 of the first auxiliary power supply contact, and sends U1 to the first control unit 21. After receiving U1, the first control unit 21 records time T1 at which U1 is received, and sends U1 and T1 to the main control module 12.

In a possible implementation, the user may scan a two-dimensional code on the first charging gun 26 to start charging. In a possible implementation, the user may select the first charging gun 26 on a human-computer interaction interface of the charging terminal 20 to start charging.

In a possible implementation, the user may use a charging APP or a charging mini program to start charging.

A method for starting charging by a user is not limited in this application. For ease of description, this embodiment of this application is described in detail by using an example in which the user scans a two-dimensional code on the first charging gun 26 to start charging.

Because A2+ and A2- of the vehicle socket 2 are floating and not connected to the BMS, and the auxiliary power supply loop between the first auxiliary power supply 25 and the vehicle socket 2 is not on, the second auxiliary power supply voltage detection module 24 cannot detect a voltage U2 of the second auxiliary power supply contact. In other words, the main control module 12 cannot obtain a second voltage signal of the second auxiliary power supply contact, and therefore cannot determine, by comparing the first voltage signal with the second voltage signal, whether the first charging gun 26 and the second charging gun 27 are inserted into a same vehicle.

Specifically, after the main control module 12 receives U1 and T1 sent by the first control unit 21, if U2 and T2 sent by the second control unit 22 are not received within preset time, the main control module 12 determines that timeout occurs.

In a possible implementation, after the main control module 12 receives U1 and T1 sent by the first control unit 21, if U2 and T2 sent by the second control unit 22 are not received within 10 seconds, the main control module 12 determines that timeout occurs.

In a case that the main control module 12 obtains the first voltage signal, the charging device 300 obtains a first communication signal of a first communication contact and a second communication signal of a second communication contact, and determines, based on the first communication signal and the second communication signal, whether to enable the first charging gun 26 and the second charging gun 27 to simultaneously output currents to charge the vehicle.

The first communication signal includes first charging information, and the first charging information includes a first vehicle handshake message and a first vehicle recognition message. The second communication signal includes second charging information, and the second charging information includes a second vehicle handshake message and a second vehicle recognition message.

Specifically, the first control unit 21 establishes a communication connection with the BMS of the vehicle by using the first communication contact, to be in communication with the BMS of the vehicle. The first control unit 21 sends a CHM and a CRM to the BMS. After receiving the CHM and the CRM, the BMS sends a BHM and a BRM of the vehicle to the first control unit 21 by using the first communication contact. The first control unit 21 sends the received BHM and BRM to the main control module 12. In addition, because S2+ and S2- of the vehicle socket 2 are floating and not connected to the BMS, the second control unit 22 cannot be in communication with the BMS. In this case, the second control unit 22 cannot obtain the BHM and the BRM of the vehicle, and therefore cannot send the BHM and the BRM of the vehicle to the main control module 12.

The main control module 12 receives only the first communication signal of the first communication contact, and cannot receive the second communication signal of the second communication contact, so that the main control module 12 cannot determine, based on the first communication signal and the second communication signal, whether the first charging gun 26 and the second charging gun 27 are inserted into a same vehicle.

Specifically, after the main control module 12 receives the first communication signal, if the second communication signal is not received within preset time, the main control module 12 determines that timeout occurs.

In a possible implementation, after the main control module 12 receives the first communication signal, if the second communication signal is not received within 10 seconds, the main control module 12 determines that timeout occurs. A human-computer interaction interface, a charging APP, or a charging mini program of the charging terminal 20 displays information of only single-gun charging and manual pairing required. The user may select single-gun charging or manual pairing.

With reference to FIG. 2 and FIG. 8, it should be noted that after the first charging gun 26 and the second charging gun 27 are successfully inserted into the vehicle socket 1 and the vehicle socket 2 respectively, even if the first charging gun 26 and the second charging gun 27 are not successfully paired, the first control unit 21 may still be in communication with the BMS. The BMS is in intercommunication with the first control unit 21. After charging parameter configuration is completed, the main control module 12 controls the power supply module 11 to output a current, so that the first charging gun 26 outputs the current to charge the vehicle. Therefore, even if the main control module 12 cannot determine whether the first charging gun 26 and the second charging gun 27 are connected to a same vehicle, the first charging gun 26 may still have entered a charging procedure, and output a current to charge the vehicle.

During specific implementation, the user may learn, through a human-computer interaction interface on a charging APP, a charging mini program, or a charging terminal, whether the first charging gun 26 is charging the vehicle.

If the user selects single-gun charging, the user does not need to remove the first charging gun 26. The first charging gun 26 inserted into the vehicle socket 1 outputs a current to charge the vehicle.

If the user selects manual pairing and the first charging gun 26 has outputted a current to charge the vehicle, the user may choose, through a human-computer interaction interface on a charging APP, a charging mini program, or a charging terminal, to stop charging, so that the first charging gun 26 stops outputting the current to charge the vehicle. When learning, through the human-computer interaction interface on the charging APP, the charging mini program, or the charging terminal, that the first charging gun and the second charging gun do not output currents, the user removes the two guns to perform manual pairing.

During specific implementation, the first charging gun 26 includes a first electronic locking apparatus, and the second charging gun 27 includes a second electronic locking apparatus. After the charging gun is successfully inserted into the vehicle, the electronic locking apparatus may lock the charging gun, so that the charging gun is reliably connected to the vehicle socket, and a phenomenon such as shifting or fall-off due to insecure insertion of the charging gun and the vehicle socket is prevented, thereby ensuring safety of a charging process.

When neither the first charging gun 26 nor the second charging gun 27 outputs a current to charge the vehicle, the first control unit 21 and the second control unit 22respectively send allowable unlocking signals to the first electronic locking apparatus and the second electronic locking apparatus, so that the first charging gun 26 and the second charging gun 27 are unlocked, and the user can remove the charging guns from the vehicle sockets.

After removing the first charging gun 26 and the second charging gun 27 from the vehicle sockets, the user simultaneously presses and holds buttons of the two charging guns for X seconds and then releases the buttons, or simultaneously presses buttons of the two charging guns for Y times, to pair the first charging gun 26 and the second charging gun 27.

Specifically, refer to FIG. 1 and FIG. 9. When the charging gun is not inserted into the vehicle socket, a switch S in a charging control guidance circuit is in a normally closed state, and a voltage at a detection point 1 is 6 V After the button of the charging gun is pressed, the switch S in the charging control guidance circuit is off, and then a resistor R2 is disconnected from the circuit, so that the voltage at the detection point 1 changes to 12 V After the button is released, the switch S is closed again, and the resistor R2 is connected to the circuit, so that the voltage at the detection point 1 changes to 6 V again. In other words, each time the button of the charging gun is pressed and then released, the voltage at the detection point 1 changes from 6 V to 12 V to 6 V In this case, a voltage of CC1 (a charging connection signal) detected by the charging device changes once from 6 V to 12 V to 6 V

In a possible implementation, when the user simultaneously presses and holds the buttons of the first charging gun 26 and the second charging gun 27 for X seconds and then releases the buttons, a voltage of the first charging connection confirmation contact and a voltage of the second charging connection confirmation contact both change once from 6 V to 12 V to 6 V. With reference to FIG. 10, (a) in FIG. 10 is a schematic diagram of a voltage change of a first charging connection confirmation contact, and (b) in FIG. 10 is a schematic diagram of a voltage change of a second charging connection confirmation contact. The first control unit 21 detects a voltage of the first charging connection confirmation contact, and sends a detection result to the main control module 12. Similarly, the second control unit 22 detects a voltage of the second charging connection confirmation contact, and sends a detection result to the main control module 12. The main control module 12 compares a voltage change signal of the first charging connection confirmation contact with a voltage change signal of the second charging connection confirmation contact (where both the voltage change signals are PWM signals). If both an absolute value |t1| of a time difference between rising edges of the two signals and an absolute value |t2| of a time difference between falling edges of the two signals are within a preset threshold, the main control module 12 determines that the first charging gun 26 and the second charging gun 27 are inserted into a same vehicle.

For example, in a case that values of |t1| and |t2| are both less than or equal to 1 second, the main control module 12 determines that the first charging gun 26 and the second charging gun 27 are successfully paired.

It should be noted that duration X seconds for which the user simultaneously presses and holds the buttons of the first charging gun 26 and the second charging gun 27 is not limited in this application, and may be 3 seconds, 5 seconds, 10 seconds, or the like.

In another possible implementation, the user simultaneously presses the buttons of the first charging gun 26 and the second charging gun 27 for Y times, to pair the first charging gun 26 and the second charging gun 27. For ease of description, a pairing principle is explained by using an example in which the user simultaneously presses the buttons of the first charging gun 26 and the second charging gun 27 twice. With reference to FIG. 11, (a) in FIG. 11 is a schematic diagram of a voltage change of a first charging connection confirmation contact, and (b) in FIG. 11 is a schematic diagram of a voltage change of a second charging connection confirmation contact. When the user simultaneously presses the buttons of the first charging gun 26 and the second charging gun 27 twice, the first control unit 21 detects a voltage of the first charging connection confirmation contact, and sends a detection result to the main control module 12. Similarly, the second control unit 22 detects a voltage of the second charging connection confirmation contact, and sends a detection result to the main control module 12. The main control module 12 compares a voltage change signal of the first charging connection confirmation contact with a voltage change signal of the second charging connection confirmation contact (where both the voltage change signals are PWM signals). If both absolute values |t1| and |t3| of time differences between rising edges of the two signals and absolute values |t2| and |t4| of time differences between falling edges of the two signals are within a preset threshold, the main control module 12 determines that the first charging gun 26 and the second charging gun 27 are inserted into a same vehicle. In a possible implementation, in a case that values of |t1|, |t2|, |t3|, and |t4| are all less than or equal to 1 second, the main control module 12 determines that the first charging gun 26 and the second charging gun 27 are inserted into a same vehicle.

It should be noted that the user simultaneously pressing the buttons of the first charging gun 26 and the second charging gun 27 twice is merely an example. During actual application, a quantity of times of pressing the buttons is not limited. The first charging gun 26 is inserted into the vehicle socket 1, and the second charging gun 27 is inserted into the vehicle socket 2. The first control unit 21 detects whether the first charging gun 26 is successfully inserted into the vehicle socket 1, and the second control unit 22 detects whether the second charging gun 27 is successfully inserted into the vehicle socket 2. When detecting that a voltage of the first charging connection confirmation contact is 4 V, the first control unit 21 determines that the first charging gun 26 is successfully inserted into the vehicle socket 1. Similarly, when detecting that a voltage of the second charging connection confirmation contact is 4 V, the second control unit 22 determines that the second charging gun 27 is successfully inserted into the vehicle socket 2. The first control unit 21 and the second control unit 22 respectively send, to the main control module 12, signals indicating that the first charging gun 26 and the second charging gun 27 are successfully inserted into the vehicle sockets.

The user scans a two-dimensional code on the first charging gun 26, that is, a charging gun inserted into the main vehicle socket to start charging. After the first control unit 21 receives a charging start signal, the first control unit 21 enables an auxiliary power supply loop between the first auxiliary power supply 25 and the vehicle socket 1 to be on. The first control unit 21 is in communication with the BMS, obtains the BHM and the BRM of the vehicle, and sends the obtained BHM and BRM to the main control module 12. Because S2+ and S2- of the vehicle socket 2 are floating and not connected to the BMS, the second control unit 22 cannot be in communication with the BMS, and the main control module 12 cannot obtain the BHM and the BRM that are sent by the second control unit 22.

The main control module 12 determines that the main control module 12 receives only the BHM and the BRM that are sent by the first control unit 21, and then marks the first charging gun 26 as a gun 1# and marks the second charging gun 27 as a gun 2#.

In a subsequent charging procedure, the first control unit 21 corresponding to the first charging gun 26 is in communication with the BMS of the vehicle, obtains the charging requirement information of the vehicle, and sends the obtained charging requirement information to the main control module 12. The main control module 12 allocates output voltages and output currents of the first charging gun 26 and the second charging gun 27 based on the obtained charging requirement information. The main control module 12 sends a charging signal to the power supply module 11. After receiving the signal, the power supply module 11 outputs corresponding charging voltages and charging currents to the first charging gun 26 and the second charging gun 27, so that the first charging gun 26 and the second charging gun 27 charge a same vehicle simultaneously.

During actual application, the first auxiliary power supply voltage detection module 23 and the second auxiliary power supply voltage detection module 24 may implement a voltage detection function by using a digital circuit or an analog circuit. Using the first auxiliary power supply voltage detection module 23 as an example, FIG. 12 is a schematic diagram of a digital voltage detection circuit, and FIG. 13 is a schematic diagram of an analog voltage detection circuit. One end of the voltage detection module (voltage detection circuit) is connected to the first auxiliary power supply contact, and the other end is connected to the first control unit 21. After a power supply loop of the first auxiliary power supply 25 is on, the voltage detection module may detect a voltage of the first auxiliary power supply contact, and send a detection result to the first control unit 21.

The voltage detection circuits shown in FIG. 12 and FIG. 13 are merely examples, and any circuit that can be configured to detect a voltage is suitable for this application.

It may be understood that the auxiliary power supply voltage detection module may be further configured to detect whether an output voltage of the auxiliary power supply is normal. Using the first auxiliary power supply voltage detection module 23 as an example, after receiving a voltage value sent by the first auxiliary power supply voltage detection module 23, the first control unit 21 compares the received voltage value with a preset normal output voltage value of the first auxiliary power supply 25. If the received voltage value is within a range of the preset normal output voltage value, it is determined that the first auxiliary power supply 25 has normal output. Alternatively, if the received voltage value is not within a range of the preset normal output voltage value, it is determined that the first auxiliary power supply 25 has abnormal output. In addition, when it is determined that the first auxiliary power supply 25 has abnormal output, a human-computer interaction interface on the charging terminal 20 or a charging APP may display a fault of abnormal output of the first auxiliary power supply 25.

It should be noted that, when selecting two charging guns to perform dual-gun simultaneous charging on an electric vehicle, the user may select two charging guns on a same charging terminal to be inserted into vehicle sockets, or may select two charging guns on different charging terminals to be inserted into vehicle sockets. As shown in FIG. 3, the user may freely select two of the four charging guns on the charging terminal 20 and the charging terminal 30 to be inserted into the vehicle sockets, to implement dual-gun simultaneous charging.

FIG. 3 is a schematic diagram in which one charging terminal has two charging guns. During specific implementation, a quantity of charging guns on each charging terminal is not limited, and each charging terminal has at least one charging gun.

The split-type charging device may be further configured in a multi-gun simultaneous charging scenario. An implementation principle of multi-gun simultaneous charging is the same as the implementation principle of dual-gun simultaneous charging, and details are not described herein again.

Refer to FIG. 14. An embodiment of this application provides a charging device 400, including a main control module 401 and a plurality of integrated direct current charging devices 402, 403, and the like.

The integrated direct current charging device 402 includes a first control unit 4021, a second control unit 4022, a first auxiliary power supply voltage detection module 4023, a second auxiliary power supply voltage detection module 4024, a first auxiliary power supply 4025, a first charging gun 4026, and a second charging gun 4027. Both the first control unit 4021 and the second control unit 4022 are connected to the main control module 401, and are configured to implement information exchange between the main control module 401 and the integrated direct current charging device 402. The first auxiliary power supply 4025 is configured to supply power to a BMS of a vehicle after at least one of the first charging gun 4026 and the second charging gun 4027 is successfully inserted into a vehicle socket. The first auxiliary power supply voltage detection module 4023 is separately connected to a gun head of the first charging gun 4026 and the first control unit 4021, and is configured to detect an auxiliary power supply voltage at an insertion point of the first charging gun 4026 and the vehicle socket and send a detection result to the first control unit 4021. The second auxiliary power supply voltage detection module 4024 is separately connected to a gun head of the second charging gun 4027 and the second control unit 4022, and is configured to detect an auxiliary power supply voltage at an insertion point of the second charging gun 4027 and the vehicle socket and send a detection result to the second control unit 4022.

In a possible implementation, the first auxiliary power supply voltage detection module 4023 is integrated in the first control unit 4021, and the second auxiliary power supply voltage detection module 4024 is integrated in the second control unit 4022.

The integrated direct current charging device 403 includes a third control unit 4031, a third auxiliary power supply voltage detection module 4032, a third auxiliary power supply 4033, and a third charging gun 4034. The third auxiliary power supply voltage detection module 4032 is integrated into the third control unit 4031. The third auxiliary power supply voltage detection module 4032 is connected to a gun head of the third charging gun 4034. After the third charging gun 4034 is successfully inserted into a vehicle socket, the third auxiliary power supply voltage detection module 4032 is configured to detect an auxiliary power supply voltage at an insertion point of the third charging gun 4034 and the vehicle socket.

It should be noted that the charging device 400 may include a plurality of integrated direct current charging devices, and a specific quantity is not limited. In addition, each integrated direct current charging device may have one or more charging guns. A charging gun connected to each integrated direct current charging device complies with the definition in the Chinese national standard GB/T 20234.3-2015. For a schematic diagram of a contact of a charging gun head, refer to FIG. 4. Details are not described herein again.

A dual-gun charging procedure of the charging device 400 is described by using the integrated direct current charging device 402 as an example.

For ease of description, a contact of the gun head of the first charging gun 4026 is defined as a first auxiliary power supply contact (A+, A-), a first direct current power supply contact (DC+, DC-), a first communication contact (S+, S-), and a first charging connection confirmation contact (CC1); and a contact of the gun head of the second charging gun 4027 is defined as a second auxiliary power supply contact (A+, A-), a second direct current power supply contact (DC+, DC-), a second communication contact (S+, S-), and a second charging connection confirmation contact (CC1). A dual-gun charging procedure for the vehicle model 1 is described as follows.

With reference to FIG. 1, FIG. 4, FIG. 14, and FIG. 15, a dual-gun pairing procedure of the charging device 400 for the vehicle model 1 is described. FIG. 15 is a schematic diagram of an insertion interface between charging guns and vehicle sockets of the vehicle model 1. On two vehicle sockets of the vehicle model 1, A1+ is connected to A2+, A1-is connected to A2-, S1+ is connected to S2+, and S1- is connected to S2-.

The first charging gun 4026 is inserted into the vehicle socket 1, and the second charging gun 4027 is inserted into the vehicle socket 2. The first control unit 4021 detects whether the first charging gun 4026 is successfully inserted into the vehicle socket 1, and the second control unit 4022 detects whether the second charging gun 4027 is successfully inserted into the vehicle socket 2. When detecting that a voltage of the first charging connection confirmation contact is 4 V, the first control unit 4021 determines that the first charging gun 4026 is successfully inserted into the vehicle socket 1. Similarly, when detecting that a voltage of the second charging connection confirmation contact is 4 V, the second control unit 4022 determines that the second charging gun 4027 is successfully inserted into the vehicle socket 2. The first control unit 4021 and the second control unit 4022 respectively send, to the main control module 401, signals indicating that the first charging gun 4026 and the second charging gun 4027 are successfully inserted into the vehicle sockets.

After the first charging gun 4026 and the second charging gun 4027 are respectively inserted into the vehicle socket 1 and the vehicle socket 2, a user starts charging. After the first control unit 4021 receives a charging start signal, the first control unit 4021 enables an auxiliary power supply loop between the first auxiliary power supply 4025 and the vehicle socket 1 to be on. In this case, the first auxiliary power supply contact is connected to A1+ and A1- of the vehicle socket 1, so that the first auxiliary power supply 4025 is connected to a BMS. After the auxiliary power supply loop between the first auxiliary power supply 4025 and the vehicle socket 1 is on, the charging device 400 detects a first voltage signal of the first auxiliary power supply contact. The first voltage signal includes a first voltage value and a first time value. The first voltage value is a voltage value of the first auxiliary power supply contact, and the first time value is time at which the charging device 400 obtains the first voltage value.

Specifically, the first auxiliary power supply voltage detection module 4023 detects the first voltage value U1 of the first auxiliary power supply contact, and sends U1 to the first control unit 4021. After receiving U1, the first control unit 4021 records time T1 at which U1 is received, and sends U1 and T1 to the main control module 401.

In a possible implementation, the user may scan a two-dimensional code on the first charging gun 4026 or the second charging gun 4027 to start charging.

In a possible implementation, the user may select the first charging gun 4026 or the second charging gun 4027 on a human-computer interaction interface of the integrated direct current charging device 402 to start charging.

In a possible implementation, the user may use a charging APP or a charging mini program to start charging.

A method for starting charging by a user is not limited in this application. For ease of description, this embodiment of this application is described in detail by using an example in which the user scans a two-dimensional code on the first charging gun 4026 to start charging.

Refer to FIG. 15. After the auxiliary power supply loop between the first auxiliary power supply 4025 and the vehicle socket 1 is on, A1+ and A1- of the vehicle socket 1 are powered on. Because A1+ and A1- of the vehicle socket 1 are connected in parallel to A2+ and A2- of the vehicle socket 2, A2+ and A2- of the vehicle socket 2 are also powered on almost at the same time. Therefore, there is an open-circuit voltage between A2+ and A2- of the vehicle socket 2, and a value of the open-circuit voltage is approximately equal to a value of U1.

The charging device 400 detects a second voltage signal of the second auxiliary power supply contact. The second voltage signal includes a second voltage value and a second time value. The second voltage value is a voltage value of the second auxiliary power supply contact, and the second time value is time at which the charging device obtains the second voltage value.

Specifically, the second auxiliary power supply voltage detection module 4024 detects the second voltage value U2 of the second auxiliary power supply contact, and sends U2 to the second control unit 4022. After receiving U2, the second control unit 4022 records time T2 at which U2 is received, and sends U2 and T2 to the main control module 401.

The charging device 400 determines, based on the first voltage signal and the second voltage signal, whether to enable the first direct current power supply contact and the second direct current power supply contact to simultaneously output currents to charge the vehicle.

After receiving U1 and T1 sent by the first control unit 4021 and U2 and T2 sent by the second control unit 4022, the main control module 401 determines whether the first charging gun 4026 and the second charging gun 4027 are connected to a same vehicle. Specifically, in a case that an absolute value of a difference between U1 and U2 is within a first preset threshold, and an absolute value of a difference between T1 and T2 is within a second preset threshold, the charging device 400 enables the first direct current power supply contact and the second direct current power supply contact to simultaneously output currents to charge the vehicle.

In a possible implementation, in response to |U2-U1| ≤ 2 V and |T2-T1| ≤ 1s, the main control module 401 determines that the first charging gun 4026 and the second charging gun 4027 are connected to a same vehicle.

In a possible implementation, in response to |U2-U1| ≤ 2 V and |T2-T1| ≤ 1.5s, the main control module 401 determines that the first charging gun 4026 and the second charging gun 4027 are connected to a same vehicle.

The main control module 401 marks the first charging gun 4026 as a gun 1#, and marks the second charging gun 4027 as a gun 2#.

During actual application, the charging device 400 further includes a power supply module 4028. The power supply module 4028 is configured to convert an alternating current outputted from a power grid side into a direct current, so that the first direct current power supply contact or the second direct current power supply contact outputs a current to charge the vehicle.

In a subsequent charging procedure, the first control unit 4021 corresponding to the first charging gun 4026 is in communication with the BMS of the vehicle, obtains the charging requirement information of the vehicle, and sends the obtained charging requirement information to the main control module 401. The main control module 401 allocates output voltages and output currents of the first charging gun 4026 and the second charging gun 4027 based on the obtained charging requirement information. The main control module 401 sends a charging signal to the power supply module 4028. After receiving the signal, the power supply module 4028 outputs corresponding charging voltages and charging currents to the first charging gun 4026 and the second charging gun 4027, so that the first charging gun 4026 and the second charging gun 4027 charge a same vehicle simultaneously.

Similarly, dual-gun charging procedures of the charging device 400 for the vehicle model 2, the vehicle model 3, and the vehicle model 4 are the same as the foregoing dual-gun charging procedure, and details are not described herein again.

It should be noted that the charging device 400 can not only implement pairing of two charging guns located on a same integrated direct current charging device, but also implement pairing of two charging guns located on different integrated direct current charging devices.

Refer to FIG. 16. An embodiment of this application further provides a charging device 600, including a main control module 601, a first control unit 602, a first auxiliary power supply voltage detection module 604, a first charging interface 606, a second control unit 603, a second auxiliary power supply voltage detection module 605, and a second charging interface 607. The first charging interface 606 includes a first auxiliary power supply contact 6061, a first direct current power supply contact 6062, a first communication contact 6063, and a first charging connection confirmation contact 6064. It should be noted that, the first auxiliary power supply contact 6061 is a pair of contacts A1+ and A1-, the first direct current power supply contact 6062 is a pair of contacts DC1+ and DC1-, and the first communication contact 6063 is a pair of contacts S1+ and S1-.

Similarly, the second charging interface 607 includes a second auxiliary power supply contact 6071, a second direct current power supply contact 6072, a second communication contact 6073, and a second charging connection confirmation contact 6074. It should be noted that, the second auxiliary power supply contact 6071 is a pair of contacts A2+ and A2-, the second direct current power supply contact 6072 is a pair of contacts DC2+ and DC2-, and the second communication contact 6073 is a pair of contacts S2+ and S2-.

The first auxiliary power supply voltage detection module 604 is configured to detect a voltage of the first auxiliary power supply contact 6061. The second auxiliary power supply voltage detection module 605 is configured to detect a voltage of the second auxiliary power supply contact 6071.

It should be noted that, when the charging device 600 has an own charging gun, the first charging interface 606 and the second charging interface 607 represent the charging gun; and when the charging device 600 is not connected to a charging gun and needs to be connected to a charging gun by the user, the first charging interface 606 and the second charging interface 607 represent interfaces connected to the charging gun.

The following describes a dual-gun charging procedure of the charging device 600.

A dual-gun charging procedure for the vehicle model 1 and the vehicle model 2 is described as follows.

Using an example in which the first charging interface 606 and the second charging interface 607 are connected to vehicle sockets, with reference to FIG. 16 and FIG. 17, the dual-gun charging procedure of the charging device 600 for the vehicle model 1 and the vehicle model 2 is described. FIG. 17 is a schematic diagram of a connection interface of charging interfaces and vehicle sockets of the vehicle model 1 and the vehicle model 2. On two vehicle sockets of the vehicle model 1, A1+ is connected to A2+, A1- is connected to A2-, S1+ is connected to S2+, and S1- is connected to S2-. On two vehicle sockets of the vehicle model 2, A1+ is connected to A2+, and A1- is connected to A2-. S1+ and S1- of the vehicle socket 1 are connected to a BMS, and the vehicle socket 1 is a main vehicle socket; and S2+ and S2- of the vehicle socket 2 are not connected to the BMS and are in a floating state, and the vehicle socket 2 is an auxiliary vehicle socket.

The first charging interface 606 is connected to the vehicle socket 1, and the second charging interface 607 is connected to the vehicle socket 2. The first control unit 602 detects whether the first charging interface 606 is successfully connected to the vehicle socket 1, and the second control unit 603 detects whether the second charging interface 607 is successfully connected to the vehicle socket 2. When detecting that a voltage value of the first charging connection confirmation contact 6064 is 4 V, the first control unit 602 determines that the first charging interface 606 is successfully connected to the vehicle socket 1. Similarly, when detecting that a voltage value of the second charging connection confirmation contact 6074 is 4 V, the second control unit 603 determines that the second charging interface 607 is successfully connected to the vehicle socket 2. The first control unit 602 and the second control unit 603 respectively send, to the main control module 601, signals indicating that the first charging interface 606 and the second charging interface 607 are successfully connected to the vehicle sockets.

After the first charging interface 606 and the second charging interface 607 are respectively connected to the vehicle socket 1 and the vehicle socket 2, a user starts charging. An auxiliary power supply located in the charging device 600 supplies power to a BMS of the vehicle by using the first auxiliary power supply contact 6061. The charging device 600 detects a first voltage signal of the first auxiliary power supply contact 6061. The first voltage signal includes a first voltage value and a first time value. The first voltage value is a voltage value of the first auxiliary power supply contact 6061, and the first time value is time at which the charging device obtains the first voltage value.

Specifically, the first auxiliary power supply voltage detection module 604 detects the first voltage value U1 of the first auxiliary power supply contact 6061, and sends U1 to the first control unit 602. After receiving U1, the first control unit 602 records time T1 at which U1 is received, and sends U1 and T1 to the main control module 601.

Refer to FIG. 17. After A1+ and A1- of the vehicle socket 1 are powered on, because A1+ and A1- of the vehicle socket 1 are connected in parallel to A2+ and A2- of the vehicle socket 2, A2+ and A2- of the vehicle socket 2 are also powered on almost at the same time. Therefore, there is an open-circuit voltage between A2+ and A2- of the vehicle socket 2, and a value of the open-circuit voltage is approximately equal to a value of U1. The charging device 600 detects a second voltage signal of the second auxiliary power supply contact 6071. The second voltage signal includes a second voltage value and a second time value. The second voltage value is a voltage value of the second auxiliary power supply contact 6071, and the second time value is time at which the charging device obtains the second voltage value.

Specifically, the second auxiliary power supply voltage detection module 605 detects the second voltage value U2 of the second auxiliary power supply contact 6071, and sends U2 to the second control unit 603. After receiving U2, the second control unit 603 records time T2 at which U2 is received, and sends U2 and T2 to the main control module 601.

The charging device 600 determines, based on the first voltage signal and the second voltage signal, whether to enable the first direct current power supply contact 6062 and the second direct current power supply contact 6072 to simultaneously output currents to charge the vehicle.

After receiving U1 and T1 sent by the first control unit 602 and U2 and T2 sent by the second control unit 603, the main control module 601 determines whether the first charging interface 606 and the second charging interface 607 are connected to a same vehicle. Specifically, in a case that an absolute value of a difference between U1 and U2 is within a first preset threshold, and an absolute value of a difference between T1 and T2 is within a second preset threshold, the charging device 600 enables the first direct current power supply contact 6062 and the second direct current power supply contact 6072 to simultaneously output currents to charge the vehicle.

In a possible implementation, in response to |U2-U1| ≤ 2 V and |T2-T1| ≤ 1s, the main control module 601 determines that the first charging interface 606 and the second charging interface 607 are connected to a same vehicle.

In a possible implementation, in response to |U2-U1| ≤ 2 V and |T2-T1| ≤ 1.5s, the main control module 601 determines that the first charging interface 606 and the second charging interface 607 are connected to a same vehicle. The main control module 601 marks a charging gun corresponding to the first charging interface 606 as a gun 1#, and marks a charging gun corresponding to the second charging interface 607 as a gun 2#.

During actual application, the charging device 600 further includes a power supply module. The power supply module is configured to convert an alternating current outputted from a power grid side into a direct current, so that the first direct current power supply contact 6062 or the second direct current power supply contact 6072 outputs a current to charge the vehicle.

In a subsequent charging procedure, the first control unit 602 corresponding to the first charging interface 606 is in communication with the BMS of the vehicle, obtains the charging requirement information of the vehicle, and sends the obtained charging requirement information to the main control module 601. The main control module 601 allocates output voltages and output currents of the first direct current power supply contact 6062 and the second direct current power supply contact 6072 based on the obtained charging requirement information. The main control module 601 sends a charging signal to the power supply module. After receiving the signal, the power supply module outputs corresponding charging voltages and charging currents to the first direct current power supply contact 6062 and the second direct current power supply contact 6072, so that the charging device 600 charges a same vehicle simultaneously.

A dual-gun charging procedure for the vehicle model 3 is described as follows.

Using an example in which the first charging interface 606 and the second charging interface 607 are connected to vehicle sockets, with reference to FIG. 16 and FIG. 18, a dual-gun pairing process of the charging device 600 for the vehicle model 3 is described.

FIG. 18 is a schematic diagram of a connection interface of charging interfaces and vehicle sockets of the vehicle model 3. As shown in FIG. 18, on the two vehicle sockets, S1+ is connected to S2+, and S1- is connected to S2-; A1+ and A1- of the vehicle socket 1 are connected to a BMS, and the vehicle socket 1 is a main vehicle socket; and A2+ and A2- of the vehicle socket 2 are not connected to the BMS and are in a floating state, and the vehicle socket 2 is an auxiliary vehicle socket.

The first charging interface 606 is connected to the vehicle socket 1, and the second charging interface 607 is connected to the vehicle socket 2. The first control unit 602 detects whether the first charging interface 606 is successfully connected to the vehicle socket 1, and the second control unit 603 detects whether the second charging interface 607 is successfully connected to the vehicle socket 2. When detecting that a voltage value of the first charging connection confirmation contact 6064 is 4 V, the first control unit 602 determines that the first charging interface 606 is successfully connected to the vehicle socket 1. Similarly, when detecting that a voltage value of the second charging connection confirmation contact 6074 is 4 V, the second control unit 603 determines that the second charging interface 607 is successfully connected to the vehicle socket 2. The first control unit 602 and the second control unit 603 respectively send, to the main control module 601, signals indicating that the first charging interface 606 and the second charging interface 607 are successfully connected to the vehicle sockets.

After the first charging interface 606 and the second charging interface 607 are respectively connected to the vehicle socket 1 and the vehicle socket 2, a user starts charging. An auxiliary power supply located in the charging device 600 supplies power to a BMS of the vehicle by using the first auxiliary power supply contact 6061. The charging device 600 detects a first voltage signal of the first auxiliary power supply contact 6061. The first voltage signal includes a first voltage value and a first time value. The first voltage value is a voltage value of the first auxiliary power supply contact 6061, and the first time value is time at which the charging device obtains the first voltage value.

Specifically, the first auxiliary power supply voltage detection module 604 detects the first voltage value U1 of the first auxiliary power supply contact 6061, and sends U1 to the first control unit 602. After receiving U1, the first control unit 602 records time T1 at which U1 is received, and sends U1 and T1 to the main control module 601.

Refer to FIG. 18. Because A2+ and A2- of the vehicle socket 2 are floating and not connected to the BMS, the second auxiliary power supply voltage detection module 605 cannot detect a voltage between A2+ and A2- of the vehicle socket 2. In other words, the second auxiliary power supply voltage detection module 605 cannot detect a second voltage of the second auxiliary power supply contact 6071.

The main control module 601 cannot obtain the second voltage U2 of the second auxiliary power supply contact 6071, and therefore cannot determine, by comparing values of U1 and U2, whether the two guns are successfully paired. Specifically, after the main control module 601 receives U1 and T1 sent by the first control unit 602, if U2 and T2 sent by the second control unit 603 are not received within preset time, the main control module 601 determines that timeout occurs.

In a possible implementation, after the main control module 601 receives U1 and T1 sent by the first control unit 602, if U2 and T2 sent by the second control unit 603 are not received within 10 seconds, the main control module 601 determines that timeout occurs.

In a case that the main control module 601 obtains the first voltage signal, the charging device 600 obtains a first communication signal of a first communication contact 6063 and a second communication signal of a second communication contact 6073, and determines, based on the first communication signal and the second communication signal, whether to enable the first charging interface 606 and the second charging interface 607 to simultaneously output currents to charge the vehicle.

The first communication signal includes first charging information, and the first charging information includes a first vehicle handshake message and a first vehicle recognition message. The second communication signal includes second charging information, and the second charging information includes a second vehicle handshake message and a second vehicle recognition message.

Specifically, the first control unit 602 establishes a communication connection with the BMS of the vehicle by using the first communication contact 6063, to be in communication with the BMS of the vehicle. The first control unit 602 sends a CHM and a CRM to the BMS. After receiving the CHM and the CRM, the BMS sends a BHM and a BRM of the vehicle to the first control unit 602 by using the first communication contact 6063. The first control unit 602 sends the received BHM and BRM to the main control module 601. In addition, S2+ and S2- of the vehicle socket 2 are connected in parallel to S1+ and S1- of the vehicle socket 1. Therefore, the BHM and the BRM of the vehicle that are sent by the BMS may be transmitted to the second control unit 603 through a communication cable between the BMS and the second control unit. In other words, the second control unit 603 may obtain the BHM and the BRM of the vehicle by using the second communication contact 6073. After obtaining the BHM and the BRM of the vehicle, the second control unit 603 sends the BHM and the BRM to the main control module 601. After receiving the BHM and the BRM that are sent by the first control unit 602 and the BHM and the BRM that are sent by the second control unit 603, the main control module 601 determines, based on the BHM and the BRM that are sent by the first control unit 602 and the BHM and the BRM that are sent by the second control unit 603, whether to enable the first direct current power supply contact 6062 and the second direct current power supply contact 6072 to simultaneously output currents to charge the vehicle.

A BHM includes information about an allowable charging voltage of the BMS, and a BRM includes information about a vehicle battery type, a rated battery capacity, a rated battery voltage, and a vehicle identification number (VIN, Vehicle Identification Number).

In a possible implementation, the main control module 601 determines, based on the information about the allowable charging voltage, the vehicle battery type, the rated battery capacity, and the rated battery voltage that is included in the BHM and the BRM, whether the first charging interface 606 and the second charging interface 607 are connected to a same vehicle. Specifically, if the information about the allowable charging voltage, the vehicle battery type, the rated battery capacity, and the rated battery voltage that is included in the BHM and the BRM that are sent by the first control unit 602 is the same as the information about the allowable charging voltage, the vehicle battery type, the rated battery capacity, and the rated battery voltage that is included in the BHM and the BRM that are sent by the second control unit 603, the main control module 601 determines that the first charging interface 606 and the second charging interface 607 are connected to the same vehicle.

In a possible implementation, the main control module 601 determines, based on the vehicle identification number VIN, whether the first charging interface 606 and the second charging interface 607 are connected to a same vehicle. Specifically, if the VIN included in the BHM and the BRM that are sent by the first control unit 602 is the same as the VIN included in the BHM and the BRM that are sent by the second control unit 603, the main control module 601 determines that the first charging interface 606 and the second charging interface 607 are connected to the same vehicle. The main control module 601 marks a charging gun corresponding to the first charging interface 606 as a gun 1#, and marks a charging gun corresponding to the second charging interface 607 as a gun 2#.

During actual application, the charging device 600 further includes a power supply module. The power supply module is configured to convert an alternating current outputted from a power grid side into a direct current, so that the first direct current power supply contact 6062 or the second direct current power supply contact 6072 outputs a current to charge the vehicle.

In a subsequent charging procedure, the first control unit 602 corresponding to the first charging interface 606 is in communication with the BMS of the vehicle, obtains the charging requirement information of the vehicle, and sends the obtained charging requirement information to the main control module 601. The main control module 601 allocates output voltages and output currents of the first direct current power supply contact 6062 and the second direct current power supply contact 6072 based on the obtained charging requirement information. The main control module 601 sends a charging signal to the power supply module. After receiving the signal, the power supply module outputs corresponding charging voltages and charging currents to the first direct current power supply contact 6062 and the second direct current power supply contact 6072, so that the charging device 600 charges a same vehicle simultaneously.

As shown in FIG. 19A, FIG. 19B, and FIG. 19C, an embodiment of this application further provides a method for charging an electric vehicle by a charging device. The method is applicable to the foregoing charging device. For a structure of the charging device, refer to the description in the foregoing embodiments. Details are not described herein again.

A dual-gun pairing method of a charging device or a charging station is described in detail by using an example in which a first charging interface is connected to a vehicle socket 1 (a main vehicle socket) and a second charging interface is connected to a vehicle socket 2 (an auxiliary vehicle socket).

Step 191: After a charging connection is completed, start charging, and perform step 192.

The first charging interface is connected to the vehicle socket 1, and the second charging interface is connected to the vehicle socket 2. A first control unit detects whether the first charging interface is successfully connected to the vehicle socket 1, and a second control unit detects whether the second charging interface is successfully connected to the vehicle socket 2. When detecting that a voltage of a first charging connection confirmation contact is 4 V, the first control unit determines that the first charging interface is successfully connected to the vehicle socket 1. Similarly, when detecting that a voltage of a second charging connection confirmation contact is 4 V, the second control unit determines that the second charging interface is successfully connected to the vehicle socket 2. The first control unit and the second control unit respectively send, to a main control module, signals indicating that the first charging interface and the second charging interface are successfully connected to the vehicle sockets.

After a user starts charging, an auxiliary power supply loop between an auxiliary power supply and the vehicle socket 1 is on, and the auxiliary power supply supplies power to a BMS of the vehicle by using a first auxiliary power supply contact.

Step 192: Detect a first voltage signal of a first auxiliary power supply contact and a second voltage signal of a second auxiliary power supply contact, and perform step 193.

The first voltage signal includes a first voltage value and a first time value. The first voltage value is a voltage value of the first auxiliary power supply contact, and the first time value is time at which the charging device obtains the first voltage value. The second voltage signal includes a second voltage value and a second time value. The second voltage value is a voltage value of the second auxiliary power supply contact, and the second time value is time at which the charging device obtains the second voltage value.

A first auxiliary power supply voltage detection module detects the first voltage value U1 of the first auxiliary power supply contact, and sends U1 to the first control unit. After receiving U1, the first control unit records time T1 at which U1 is received, and sends U1 and T1 to the main control module.

Similarly, the second auxiliary power supply voltage detection module detects the second voltage value U2 of the second auxiliary power supply contact, and sends U2 to the second control unit. After receiving U2, the second control unit records time T2 at which U2 is received, and sends U2 and T2 to the main control module.

Step 193: Determine whether the main control module receives the first voltage signal and the second voltage signal. If the main control module receives the first voltage signal and the second voltage signal, perform step 194. If the main control module does not receive the first voltage signal and the second voltage signal, perform step 197.

For the vehicle model 1 and the vehicle model 2, after A1+ and A1- of the vehicle socket 1 are powered on, because A1+ and A1- of the vehicle socket 1 are connected in parallel to A2+ and A2- of the vehicle socket 2, A2+ and A2-of the vehicle socket 2 are also powered on almost at the same time. Therefore, there is an open-circuit voltage between A2+ and A2- of the vehicle socket 2, and a value of the open-circuit voltage is approximately equal to a value of U1. A detection module of the charging device detects a second voltage signal of the second auxiliary power supply contact. The second voltage signal includes a second voltage value and a second time value. The second voltage value is a voltage value of the second auxiliary power supply contact, and the second time value is time at which the charging device obtains the second voltage value.

Specifically, the second auxiliary power supply voltage detection module detects the second voltage value U2 of the second auxiliary power supply contact, and sends U2 to the second control unit. After receiving U2, the second control unit records time T2 at which U2 is received, and sends U2 and T2 to the main control module.

Therefore, for the vehicle model 1 and the vehicle model 2, the main control module may receive the first voltage signal and the second voltage signal.

For the vehicle model 3 and the vehicle model 4, there is no open-circuit voltage between A2+ and A2- on the vehicle socket 2, so that the second auxiliary power supply voltage detection module cannot detect the second voltage U2 of the second auxiliary power supply contact. Therefore, the main control module can receive only the first voltage signal. Specifically, after the main control module receives the first voltage signal, if the second voltage signal is not received within preset time, the main control module determines that timeout occurs, and performs step 197.

In a possible implementation, after the main control module receives U1 and T1 sent by the first control unit, if U2 and T2 sent by the second control unit are not received within 10 seconds, the main control module determines that timeout occurs, and performs step 197.

Step 194: Determine whether an absolute value of a difference between the first voltage value and the second voltage value is within a first preset threshold and whether an absolute value of a difference between the first time value and the second time value is within a second preset threshold. If the absolute value of the difference between the first voltage value and the second voltage value is within the first preset threshold and the absolute value of the difference between the first time value and the second time value is within the second preset threshold, perform step 195. If the absolute value of the difference between the first voltage value and the second voltage value is not within the first preset threshold, or the absolute value of the difference between the first time value and the second time value is not within the second preset threshold, or the absolute value of the difference between the first voltage value and the second voltage value is not within the first preset threshold and the absolute value of the difference between the first time value and the second time value is not within the second preset threshold, perform step 196.

In a possible implementation, in response to |U2-U1| ≤ 2 V and |T2-T1| ≤ 1s, the main control module determines that the first charging interface and the second charging interface are connected to a same vehicle.

In a possible implementation, in response to |U2-U1| ≤ 2 V and |T2-T1| ≤ 1.5s, the main control module determines that the first charging interface and the second charging interface are connected to a same vehicle.

Step 195: A first direct current power supply contact and a second direct current power supply contact simultaneously output currents to charge the vehicle.

The main control module marks a charging gun corresponding to the first charging interface as a gun 1#, and marks a charging gun corresponding to the second charging interface as a gun 2#.

During actual application, the charging device further includes a power supply module. The power supply module is configured to convert an alternating current outputted from a power grid side into a direct current, so that the first direct current power supply contact or the second direct current power supply contact outputs a current to charge the vehicle.

In a subsequent charging procedure, the first control unit corresponding to the first charging interface is in communication with the BMS of the vehicle, obtains the charging requirement information of the vehicle, and sends the obtained charging requirement information to the main control module. The main control module allocates output voltages and output currents of the first direct current power supply contact and the second direct current power supply contact based on the obtained charging requirement information. The main control module sends a charging signal to the power supply module. After receiving the signal, the power supply module outputs corresponding charging voltages and charging currents to the first direct current power supply contact and the second direct current power supply contact, so that the charging device charges a same vehicle simultaneously.

Step 196: A first direct current power supply contact and a second direct current power supply contact do not simultaneously output currents to charge the vehicle.

For the vehicle model 1 and the vehicle model 2, if the absolute value of the difference between U1 and U2 is not within the first preset threshold, or the absolute value of the difference between T1 and T2 is not within the second preset threshold, or the absolute value of the difference between U1 and U2 is not within the first preset threshold and the absolute value of the difference between T1 and T2 is not within the second preset threshold, the main control module determines that the first charging interface and the second charging interface are not connected to a same electric vehicle, and the first charging interface and the second charging interface are respectively connected to different vehicles to charge the vehicles.

Step 197: Obtain a first communication signal of a first communication contact and a second communication signal of a second communication contact, and perform step 198.

The first communication signal includes first charging information, and the first charging information includes a first vehicle handshake message and a first vehicle recognition message. The second communication signal includes second charging information, and the second charging information includes a second vehicle handshake message and a second vehicle recognition message.

Specifically, the first control unit establishes a communication connection with the BMS of the vehicle by using the first communication contact, to be in communication with the BMS of the vehicle. The first control unit sends a CHM and a CRM to the BMS. After receiving the CHM and the CRM, the BMS sends a BHM and a BRM of the vehicle to the first control unit by using the first communication contact. The first control unit sends the received BHM and BRM to the main control module.

In addition, S2+ and S2- of the vehicle socket 2 of the vehicle model 3 are connected in parallel to S1+ and S1- of the vehicle socket 1. Therefore, the BHM and the BRM of the vehicle that are sent by the BMS may be transmitted to the second control unit through a communication cable between the BMS and the second control unit. In other words, the second control unit may obtain the BHM and the BRM of the vehicle by using the second communication contact. After obtaining the BHM and the BRM of the vehicle, the second control unit sends the BHM and the BRM to the main control module.

Step 198: Determine whether the main control module receives the first communication signal and the second communication signal. If the main control module receives the first communication signal and the second communication signal, perform step 199. If the main control module does not receive the first communication signal and the second communication signal, perform step 203.

For the vehicle model 3, the main control module may obtain the first communication signal of the first communication contact and the second communication signal of the second communication contact.

For the vehicle model 4, S2+ and S2- of the vehicle socket 2 are floating and not connected to the BMS. Therefore, the second control unit cannot obtain the BHM and the BRM of the vehicle. The main control module can obtain only the first communication signal of the first communication contact.

In a possible implementation, after receiving the BHM and the BRM sent by the first control unit, if the main control module does not receive the BHM and the BRM sent by the second control unit within 10 seconds, the main control module determines that timeout occurs, and performs step 202.

Step 199: Determine whether the first communication signal and the second communication signal are information of a same vehicle. If the first communication signal and the second communication signal are the information about the same vehicle, perform step 200. If the first communication signal and the second communication signal are not the information about the same vehicle, perform step 201.

A BHM includes information about an allowable charging voltage of the BMS, and a BRM includes information about a vehicle battery type, a rated battery capacity, a rated battery voltage, and a vehicle identification number (VIN, Vehicle Identification Number).

In a possible implementation, the main control module determines, based on the information about the allowable charging voltage, the vehicle battery type, the rated battery capacity, and the rated battery voltage that is included in the BHM and the BRM, whether the first charging interface and the second charging interface are connected to a same vehicle. Specifically, if the information about the allowable charging voltage, the vehicle battery type, the rated battery capacity, and the rated battery voltage that is included in the BHM and the BRM that are sent by the first control unit is the same as the information about the allowable charging voltage, the vehicle battery type, the rated battery capacity, and the rated battery voltage that is included in the BHM and the BRM that are sent by the second control unit, the main control module determines that the first charging interface and the second charging interface are connected to the same vehicle.

In a possible implementation, the main control module determines, based on the vehicle identification number VIN, whether the first charging interface and the second charging interface are connected to a same vehicle. Specifically, if the VIN included in the BHM and the BRM that are sent by the first control unit is the same as the VIN included in the BHM and the BRM that are sent by the second control unit, the main control module determines that the first charging interface and the second charging interface are connected to the same vehicle.

Step 200: A first direct current power supply contact and a second direct current power supply contact simultaneously output currents to charge the vehicle.

The main control module marks a charging gun corresponding to the first charging interface as a gun 1#, and marks a charging gun corresponding to the second charging interface as a gun 2#.

During actual application, the charging device further includes a power supply module. The power supply module is configured to convert an alternating current outputted from a power grid side into a direct current, so that the first direct current power supply contact or the second direct current power supply contact outputs a current to charge the vehicle.

In a subsequent charging procedure, the first control unit corresponding to the first charging interface is in communication with the BMS of the vehicle, obtains the charging requirement information of the vehicle, and sends the obtained charging requirement information to the main control module. The main control module allocates output voltages and output currents of the first direct current power supply contact and the second direct current power supply contact based on the obtained charging requirement information. The main control module sends a charging signal to the power supply module. After receiving the signal, the power supply module outputs corresponding charging voltages and charging currents to the first direct current power supply contact and the second direct current power supply contact, so that the charging device charges a same vehicle simultaneously.

Step 201: A first direct current power supply contact and a second direct current power supply contact do not simultaneously output currents to charge the vehicle.

If the main control module determines that the first charging interface and the second charging interface are not connected to the same vehicle, the charging device enables the first charging interface and the second charging interface to respectively charge the vehicles connected to the first charging interface and the second charging interface. Step 202: Perform manual pairing, and perform step 203.

For the vehicle model 4, the main control module obtains only the first communication signal of the first communication contact, and determines that the first charging interface and the second charging interface cannot simultaneously output, based on the first communication signal and the second communication signal, currents to charge the vehicle.

A human-computer interaction interface on a charging APP, a charging mini program, or a charging terminal displays information of manual pairing required by the user.

During specific implementation, the user may learn, through a human-computer interaction interface on a charging APP, a charging mini program, or a charging terminal, whether the first charging gun (which is the charging gun connected to the first charging interface) is charging the vehicle.

If the user selects single-gun charging, the user does not need to remove the first charging gun. The first charging gun inserted into the vehicle socket 1 may output a current to charge the vehicle.

If the user selects manual pairing and the first charging gun has outputted a current to charge the vehicle, the user may choose, through a human-computer interaction interface on a charging APP, a charging mini program, or a charging terminal, to stop charging, so that the first charging gun stops outputting the current to charge the vehicle.

When learning, through the human-computer interaction interface on the charging APP, the charging mini program, or the charging terminal, that the first charging gun and the second charging gun do not output currents, the user removes the two guns to perform manual pairing.

During specific implementation, the first charging gun further includes a first electronic locking apparatus, and the second charging gun further includes a second electronic locking apparatus. After the charging gun is inserted into the vehicle, the electronic locking apparatus may lock the charging gun, so that the charging gun is reliably connected to the vehicle socket, and a phenomenon such as shifting or fall-off due to insecure insertion of the charging gun and the vehicle socket is prevented, thereby ensuring safety of a charging process.

When neither the first charging gun nor the second charging gun outputs a current to charge the vehicle, the first control unit and the second control unit respectively send allowable unlocking signals to the first electronic locking apparatus and the second electronic locking apparatus, so that the first charging gun and the second charging gun are unlocked, and the user can remove the charging guns from the vehicle sockets.

Step 203: The user removes the two guns, and simultaneously presses and holds buttons of the two charging guns for X seconds or simultaneously presses buttons of the two charging guns for Y times, to perform step 204.

For ease of description, a charging control guidance circuit corresponding to the first charging gun is defined as a first charging control guidance circuit, and a charging control guidance circuit corresponding to the second charging gun is defined as a second charging control guidance circuit.

In a possible implementation, when the user simultaneously presses and holds the buttons of the first charging gun and the second charging gun for X seconds and then releases the buttons, a voltage at a detection point 1 (a voltage of CC1-1) of the first charging control guidance circuit and a voltage at a detection point 1 (a voltage of CC1-2) of the second charging control guidance circuit both change once from 6 V to 12 V to 6 V With reference to FIG. 10, (a) in FIG. 10 is a schematic diagram of a voltage change of CC1-1, and (b) in FIG. 10 is a schematic diagram of a voltage change of CC1-2. The first control unit detects the voltage of CC1-1, and sends a detection result to the main control module. Similarly, the second control unit detects the voltage of CC1-2, and sends a detection result to the main control module. It should be noted that when the user simultaneously presses and holds the buttons of the first charging gun and the second charging gun for X seconds and then releases the buttons, duration X seconds for which the user presses and holds the buttons is not limited, and may be 5 seconds, 10 seconds, or the like.

In another possible implementation, the user simultaneously presses the buttons of the first charging gun and the second charging gun for Y times, to pair the first charging gun and the second charging gun. For ease of description, a pairing principle is explained by using an example in which the user simultaneously presses the buttons of the first charging gun and the second charging gun twice. Refer to FIG. 11. After the user simultaneously presses the buttons of the first charging gun and the second charging gun twice, the first control unit sends a detected voltage change signal of CC1-1 to the main control module, and the second control unit sends a detected voltage change signal of CC1-2 to the main control module. It should be noted that the user simultaneously pressing the buttons of the first charging gun 26 and the second charging gun 27 twice is merely an example. During actual application, a quantity of times of pressing the buttons is not limited.

Step 204: The main control module determines whether an absolute value of a time difference between rising edges of the voltage change signal of CC1-1 and the voltage change signal of CC1-2 and an absolute value of a time difference between falling edges of the voltage change signal of CC1-1 and the voltage change signal of CC1-2 are both within a preset threshold. If the absolute value of the time difference between the rising edges of the voltage change signal of CC1-1 and the voltage change signal of CC1-2 and the absolute value of the time difference between the falling edges of the voltage change signal of CC1-1 and the voltage change signal of CC1-2 are both within the preset threshold, perform step 205. If the absolute value of the time difference between the rising edges of the voltage change signal of CC1-1 and the voltage change signal of CC1-2 is not within the preset threshold, or the absolute value of the time difference between the falling edges of the voltage change signal of CC1-1 and the voltage change signal of CC1-2 is not within the preset threshold, or the absolute value of the time difference between the rising edges of the voltage change signal of CC1-1 and the voltage change signal of CC1-2 and the absolute value of the time difference between the falling edges of the voltage change signal of CC1-1 and the voltage change signal of CC1-2 are not within the preset threshold, perform step 206.

Refer to FIG. 10 and FIG. 11. In a possible implementation, the main control module determines whether the absolute value of the time difference between the rising edges of the voltage change signal of CC1-1 and the voltage change signal of CC1-2 and the absolute value of the time difference between the falling edges of the voltage change signal of CC1-1 and the voltage change signal of CC1-2 are both less than or equal to 1 second. If the absolute value of the time difference between the rising edges of the voltage change signal of CC1-1 and the voltage change signal of CC1-2 and the absolute value of the time difference between the falling edges of the voltage change signal of CC1-1 and the voltage change signal of CC1-2 are both less than or equal to 1 second, step 205 is performed. If the absolute value of the time difference between the rising edges of the voltage change signal of CC1-1 and the voltage change signal of CC1-2 is greater than 1 second, or the absolute value of the time difference between the falling edges of the voltage change signal of CC1-1 and the voltage change signal of CC1-2 is greater than 1 second, or the absolute value of the time difference between the rising edges of the voltage change signal of CC1-1 and the voltage change signal of CC1-2 and the absolute value of the time difference between the falling edges of the voltage change signal of CC1-1 and the voltage change signal of CC1-2 are both greater than 1 second, step 206 is performed.

Step 205: A first direct current power supply contact and a second direct current power supply contact simultaneously output currents to charge the vehicle.

If the absolute value of the time difference between the rising edges of the two signals and the absolute value of the time difference between the falling edges of the two signals are within the preset threshold, the main control module determines that the first charging interface and the second charging interface are connected to a same vehicle, and the main control module marks the charging gun corresponding to the first charging interface as a gun 1# and marks the charging gun corresponding to the second charging interface as a gun 2# (an auxiliary gun).

During actual application, the charging device further includes a power supply module. The power supply module is configured to convert an alternating current outputted from a power grid side into a direct current, so that the first direct current power supply contact or the second direct current power supply contact outputs a current to charge the vehicle.

In a subsequent charging procedure, the first control unit corresponding to the first charging interface is in communication with the BMS of the vehicle, obtains the charging requirement information of the vehicle, and sends the obtained charging requirement information to the main control module. The main control module allocates output voltages and output currents of the first direct current power supply contact and the second direct current power supply contact based on the obtained charging requirement information. The main control module sends a charging signal to the power supply module. After receiving the signal, the power supply module outputs corresponding charging voltages and charging currents to the first direct current power supply contact and the second direct current power supply contact, so that the charging device charges a same vehicle simultaneously.

Step 206: A first direct current power supply contact and a second direct current power supply contact do not simultaneously output currents to charge the vehicle.

If the absolute value of the time difference between the rising edges of the two signals or the absolute value of the time difference between the falling edges of the two signals is not within the preset threshold, or neither the absolute value of the time difference between the rising edges of the two signals nor the absolute value of the time difference between the falling edges of the two signals is within the preset threshold, the main control module determines that the first charging interface and the second charging interface are connected to different vehicles, and the charging device enables the first charging interface and the second charging interface to respectively charge the vehicles connected to the first charging interface and the second charging interface.

An embodiment of this application further provides a method for charging an electric vehicle by a charging device. The method includes a plurality of states, and each state is for managing a charging action in a charging process of the charging device. Each state is set with conditions for entering and exiting the state. The charging device is also configured with a charging device controller for storing and managing these states.

For ease of description, a contact of the first charging interface is defined as a first auxiliary power supply contact (A+, A-), a first direct current power supply contact (DC+, DC-), a first communication contact (S+, S-), and a first charging connection confirmation contact (CC1); and a contact of the second charging interface is defined as a second auxiliary power supply contact (A+, A-), a second direct current power supply contact (DC+, DC-), a second communication contact (S+, S-), and a second charging connection confirmation contact (CC1).

As shown in FIG. 20(a), after the first charging interface and the second charging interface are physically connected to a vehicle, the charging device enters a dual charging interface connection state. When the charging device controller detects that voltages of the first charging connection confirmation contact and the second charging connection confirmation contact are both 4 V, the charging device enters an auxiliary power supply power-on state.

As shown in FIG. 20(b), after the charging device enters the auxiliary power supply power-on state, an auxiliary power supply loop in the charging device is on, and an auxiliary power supply outputs a current to supply power to a BMS of the vehicle. The charging device controller detects a first voltage signal of the first auxiliary power supply contact and a second voltage signal of the second auxiliary power supply contact.

The first voltage signal includes a first voltage value and a first time value. The first voltage value is a voltage value of the first auxiliary power supply contact, and the first time value is time at which the charging device obtains the first voltage value.

The second voltage signal includes a second voltage value and a second time value. The second voltage value is a voltage value of the second auxiliary power supply contact, and the second time value is time at which the charging device obtains the second voltage value.

If the charging device controller obtains the first voltage signal or the second voltage signal, the charging device enters a dual charging handshake recognition state.

If the charging device controller obtains the first voltage signal and the second voltage signal, the charging device controller determines whether the first voltage signal and the second voltage signal meet a preset condition. If the preset condition is met, a dual charging interface power supply state is entered. If the preset condition is not met, a single charging interface power supply state is entered.

In a possible implementation, in a case that an absolute value of a difference between the first voltage value and the second voltage value is less than or equal to 2 V and an absolute value of a difference between the first time value and the second time value is less than or equal to 1 second, the charging device controller determines that the first charging interface and the second charging interface are connected to a same vehicle, the charging device enters the dual charging interface power supply state, and the first charging interface and the second charging interface simultaneously output currents to charge the vehicle.

In a possible implementation, in a case that an absolute value of a difference between the first voltage value and the second voltage value is less than or equal to 2 V and an absolute value of a difference between the first time value and the second time value is less than or equal to 1.5 second, the charging device controller determines that the first charging interface and the second charging interface are connected to a same vehicle, the charging device enters the dual charging interface power supply state, and the first charging interface and the second charging interface simultaneously output currents to charge the vehicle.

The charging device marks a charging gun corresponding to the first charging interface as a gun 1#, and marks a charging gun corresponding to the second charging interface as a gun 2#.

In a subsequent charging procedure, a first control unit corresponding to the first charging interface is in communication with the BMS of the vehicle, obtains charging requirement information of the vehicle, and sends the obtained charging requirement information to the charging device. The charging device allocates output voltages and output currents of the first direct current power supply contact and the second direct current power supply contact based on the obtained charging requirement information.

If the first voltage signal and the second voltage signal do not meet the preset condition, the charging device enters the single charging interface power supply state. To be specific, the charging device determines that the first charging interface and the second charging interface are not connected to the same vehicle, and the two charging interfaces are respectively connected to different vehicles to charge the vehicles according to a single-gun charging procedure.

As shown in FIG. 20(c), after obtaining the first voltage signal or the second voltage signal, the charging device controller enters the dual charging handshake recognition state, and the charging device performs handshake communication with the vehicle.

The charging device controller obtains a first communication signal of the first communication contact and a second communication signal of the second communication contact, and determines whether the first communication signal and the second communication signal meet a preset condition. If the first communication signal and the second communication signal meet the preset condition, the charging device enters the dual charging interface power supply state. If the first communication signal and the second communication signal do not meet the preset condition, the charging device enters the single charging interface power supply state.

It should be noted that the first communication signal includes first charging information, and the first charging information includes a first vehicle handshake message and a first vehicle recognition message, and the second communication signal includes second charging information, and the second charging information includes a second vehicle handshake message and a second vehicle recognition message. A BHM includes information about an allowable charging voltage of the BMS, and a BRM includes information about a vehicle battery type, a rated battery capacity, a rated battery voltage, and a vehicle identification number (VIN, Vehicle Identification Number).

In a possible implementation, the charging device controller determines, based on the information about the allowable charging voltage, the vehicle battery type, the rated battery capacity, and the rated battery voltage that is included in the BHM and the BRM, whether the first charging interface and the second charging interface are connected to a same vehicle. Specifically, if the information about the allowable charging voltage, the vehicle battery type, the rated battery capacity, and the rated battery voltage that is included in the first charging information is the same as the information about the allowable charging voltage, the vehicle battery type, the rated battery capacity, and the rated battery voltage that is included in the second charging information, the charging device controller determines that the first charging interface and the second charging interface are connected to the same vehicle, the charging device enters the dual charging interface power supply state, and the first charging interface and the second charging interface simultaneously output currents to charge the vehicle.

In a possible implementation, the charging device controller determines, based on the vehicle identification number VIN, whether the first charging interface and the second charging interface are connected to a same vehicle. Specifically, if the VIN included in the first charging information is the same as the VIN included in the second charging information, the charging device controller determines that the first charging interface and the second charging interface are connected to the same vehicle, the charging device enters the dual charging interface power supply state, and the first charging interface and the second charging interface simultaneously output currents to charge the vehicle.

If the first communication signal and the second communication signal do not meet the preset condition, the charging device enters the single charging interface power supply state. To be specific, the charging device determines that the first charging interface and the second charging interface are not connected to the same vehicle, and the two charging interfaces are respectively connected to different vehicles to charge the vehicles according to a single-gun charging procedure.

In conclusion, the method for charging an electric vehicle by a charging device provided in this application includes a plurality of states, such as a dual charging interface connection state, an auxiliary power supply power-on state, a dual charging handshake recognition state, and a dual charging interface power supply state.

When the charging device controller detects that voltage values of the first charging connection confirmation contact and the second charging connection confirmation contact are both 4 V, the charging device exits the dual charging interface connection state, and enters the auxiliary power supply power-on state.

When the charging device controller obtains the first voltage signal or the second voltage signal, the charging device exits the auxiliary power supply power-on state, and enters the dual charging handshake recognition state.

When the charging device controller obtains the first voltage signal and the second voltage signal, and determines that the first voltage signal and the second voltage signal meet the preset condition, the charging device exits the auxiliary power supply power-on state, and enters the dual charging interface power supply state.

When the charging device controller obtains the first communication signal and the second communication signal, and determines that the first communication signal and the second communication signal meet the preset condition, the charging device exits the dual charging handshake recognition state, and enters the dual charging interface power supply state.

## Claims

1. A charging device (400) for charging an electric vehicle, wherein the charging device (400) comprises a first charging interface (606) and a second charging interface (607), a first auxiliary power supply voltage detection module (23, 604), a second auxiliary power supply voltage detection module (24, 605), and a charging device controller (600), wherein
the first charging interface (606) comprises a first auxiliary power supply contact (A+,A-) and a first direct current power supply contact, wherein the first auxiliary power supply (A+,A-) contact is configured to supply power to a controller of the electric vehicle; and
the second charging interface (607) comprises a second auxiliary power supply contact (A+,A-) and a second direct current power supply contact; and
the charging device (400) is configured to:
detect a first voltage signal of the first auxiliary power supply contact (A+,A-) and a second voltage signal of the second auxiliary power supply contact (A+,A-); wherein
the first voltage signal comprises a first voltage value and a first time value, wherein the first voltage value is a voltage value of the first auxiliary power supply contact (A+,A-), and the first time value is time at which the charging device (400) obtains the first voltage value; and
the second voltage signal comprises a second voltage value and a second time value, wherein the second voltage value is a voltage value of the second auxiliary power supply contact (A+,A-), and the second time value is time at which the charging device (400) obtains the second voltage value,
wherein
the first auxiliary power supply voltage detection module (23, 604) is configured to detect the voltage value of the first auxiliary power supply contact (A+,A-);
the second auxiliary power supply voltage detection module (24, 605) is configured to detect the voltage value of the second auxiliary power supply contact (A+,A-); and
the charging device controller (600) is configured to obtain the first voltage signal and the second voltage signal.
wherein in a case that the charging device controller (600) obtains the first voltage signal and the second voltage signal, the charging device (400) is configured to:
determine whether an absolute value of a difference between the first voltage value and the second voltage value is within a first preset threshold and whether an absolute value of a difference between the first time value and the second time value is within a second preset threshold; and
if the charging device (400) determines that the absolute value of the difference between the first voltage value and the second voltage value is within the first preset threshold and that the absolute value of the difference between the first time value and the second time value is within the second preset threshold, the charging device (400) is configured to enable the first direct current power supply contact and the second direct current power supply contact to charge the electric vehicle.

2. The charging device (400) according to claim 1, wherein the first charging interface (606) further comprises a first communication contact, and the second charging interface (607) further comprises a second communication contact; and
in a case that the charging device controller (600) obtains the first voltage signal or the second voltage signal, the charging device (400) is configured to:
obtain a first communication signal of the first communication contact, wherein the first communication signal comprises first charging information of the electric vehicle, and the first charging information comprises a first vehicle handshake message, a first vehicle recognition message, and a first vehicle identification number;
obtain a second communication signal of the second communication contact, wherein the second communication signal comprises second charging information of the electric vehicle, and the second charging information comprises a second vehicle handshake message, a second vehicle recognition message, and a second vehicle identification number; and
enable the first direct current power supply contact and the second direct current power supply contact based on the first charging information and the second charging information to charge the electric vehicle.

3. The charging device (400) according to claim 2, wherein the vehicle handshake message comprises information about an allowable charging voltage of a vehicle battery, and the vehicle recognition message comprises information about a vehicle battery type, a rated battery capacity, and a rated battery voltage; and
in a case that the first charging information is the same as the second charging information, the charging device (400) is configured to enable the first direct current power supply contact and the second direct current power supply contact to charge the electric vehicle.

4. A method for charging an electric vehicle by a charging device (400), wherein the method comprises:
storing a state machine, wherein the state machine comprises a plurality of states, and each of the plurality of states is for managing a charging action in a charging process of the charging device (400); and
the plurality of states comprise a dual charging interface connection state and a dual charging interface power supply state, wherein the dual charging interface connection state indicates that a first charging interface (606) of the charging device (400) and a second charging interface (607) of the charging device (400) are physically connected to the electric vehicle, and the dual charging interface power supply state indicates that a first direct current power supply contact of the charging device (400) and a second direct current power supply contact of the charging device (400) charge the electric vehicle; and
configuring a charging device controller (600) of the charging device (400) to control, based on the state machine, the charging device (400) to charge the electric vehicle
wherein the plurality of states further comprise an auxiliary power supply power-on state, and the auxiliary power supply power-on state indicates that an auxiliary power supply of the charging device (400) supplies power to a controller of the electric vehicle,
wherein a first voltage signal of an auxiliary power supply contact of the first charging interface (606) comprises a first voltage value and a first time value, wherein the first voltage value is a voltage value of the auxiliary power supply contact of the first charging interface (606), and the first time value is time at which the charging device (400) obtains the first voltage value;
a second voltage signal of an auxiliary power supply contact of the second charging interface (607) comprises a second voltage value and a second time value, wherein the second voltage value is a voltage value of the auxiliary power supply contact of the second charging interface (607), and the second time value is time at which the charging device (400) obtains the second voltage value; and
when determining that an absolute value of a difference between the first voltage value and the second voltage value is within a first preset threshold and an absolute value of a difference between the first time value and the second time value is within a second preset threshold, the charging device (400) exits the auxiliary power supply power-on state and enters the dual charging interface power supply state.

5. The method according to claim 4, wherein the state machine is configured to provide an entry condition and an exit condition of at least one of the plurality of states.

6. The method according to one of claims 4 or 5, wherein an entry condition of the auxiliary power supply power-on state is that: the charging device controller (600) detects that a voltage value of a charging connection confirmation contact of the first charging interface (606) and a voltage value of a charging connection confirmation contact of the second charging interface (607) are both 4 V; and
an exit condition of the auxiliary power supply power-on state is that:
the charging device controller (600) obtains a first voltage signal of an auxiliary power supply contact of the first charging interface (606) or a second voltage signal of an auxiliary power supply contact of the second charging interface (607); or
the charging device controller (600) obtains the first voltage signal and the second voltage signal, and determines that the first voltage signal and the second voltage signal meet a preset condition.

7. The method according to any one of claims 4 to 6, wherein the plurality of states further comprise a dual charging handshake recognition state, and the dual charging handshake recognition state indicates that the charging device (400) is in communication with the electric vehicle;
an entry condition of the dual charging handshake recognition state is that: the charging device controller (600) obtains the first voltage signal or the second voltage signal; and
an exit condition of the dual charging handshake recognition state is that: the charging device controller (600) obtains a first communication signal and a second communication signal, and determines that the first communication signal and the second communication signal meet a preset condition, wherein
the first communication signal comprises first charging information, the first charging information comprises a first vehicle handshake message, a first vehicle recognition message, and a first vehicle identification number, the second communication signal comprises second charging information, and the second charging information comprises a second vehicle handshake message, a second vehicle recognition message, and a second vehicle identification number.

8. The method according to claim 7, wherein the vehicle handshake message comprises information about an allowable charging voltage of a vehicle battery, and the vehicle recognition message comprises information about a vehicle battery type, a rated battery capacity, and a rated battery voltage; and
when determining that the first charging information is the same as the second charging information, the charging device (400) exits the dual charging handshake recognition state and enters the dual charging interface power supply state.

9. The method according to any one of claims 4 to 8, wherein an exit condition of the dual charging interface connection state is that: the charging device controller (600) detects that the voltage value of the charging connection confirmation contact of the first charging interface (606) and the voltage value of the charging connection confirmation contact of the second charging interface (607) are both 4 V

## Patentansprüche

1. Ladevorrichtung (400) zum Laden eines Elektrofahrzeugs, wobei die Ladevorrichtung (400) eine erste Ladeschnittstelle (606) und eine zweite Ladeschnittstelle (607), ein erstes Hilfsstromversorgungsspannungserfassungsmodul (23, 604), ein zweites Hilfsstromversorgungsspannungserfassungsmodul (24, 605) und eine Ladevorrichtungssteuerung (600) umfasst, wobei
die erste Ladeschnittstelle (606) einen ersten Hilfsstromversorgungskontakt (A+, A-) und einen ersten Gleichstromversorgungskontakt umfasst, wobei der erste Hilfsstromversorgungskontakt (A+, A-) dafür ausgelegt ist, einer Steuerung des Elektrofahrzeugs Strom zuzuführen; und
die zweite Ladeschnittstelle (607) einen zweiten Hilfsstromversorgungskontakt (A+, A-) und einen zweiten Gleichstromversorgungskontakt umfasst; und
die Ladevorrichtung (400) für folgenden Vorgang ausgelegt ist:
Erfassen eines ersten Spannungssignals des ersten Hilfsstromversorgungskontakts (A+, A-) und eines zweiten Spannungssignals des zweiten Hilfsstromversorgungskontakts (A+, A-); wobei
das erste Spannungssignal einen ersten Spannungswert und einen ersten Zeitwert umfasst, wobei der erste Spannungswert ein Spannungswert des ersten Hilfsstromversorgungskontakts (A+, A-) ist und der erste Zeitwert eine Zeit ist, zu der die Ladevorrichtung (400) den ersten Spannungswert erhält; und
das zweite Spannungssignal einen zweiten Spannungswert und einen zweiten Zeitwert umfasst, wobei der zweite Spannungswert ein Spannungswert des zweiten Hilfsstromversorgungskontakts (A+, A-) ist und der zweite Zeitwert eine Zeit ist, zu der die Ladevorrichtung (400) den zweiten Spannungswert erhält,
wobei
das erste Hilfsstromversorgungsspannungserfassungsmodul (23, 604) dafür ausgelegt ist, den Spannungswert des ersten Hilfsstromversorgungskontakts (A+, A-) zu erfassen;
das zweite Hilfsstromversorgungsspannungserfassungsmodul (24, 605) dafür ausgelegt ist, den Spannungswert des zweiten Hilfsstromversorgungskontakts (A+, A-) zu erfassen; und
die Ladevorrichtungssteuerung (600) dafür ausgelegt ist, das erste Spannungssignal und das zweite Spannungssignal zu erhalten,
wobei in einem Fall, in dem die Ladevorrichtungssteuerung (600) das erste Spannungssignal und das zweite Spannungssignal erhält, die Ladevorrichtung (400) für folgende Vorgänge ausgelegt ist:
Bestimmen, ob ein Absolutwert einer Differenz zwischen dem ersten Spannungswert und dem zweiten Spannungswert innerhalb eines ersten voreingestellten Schwellenwerts liegt und ob ein Absolutwert einer Differenz zwischen dem ersten Zeitwert und dem zweiten Zeitwert innerhalb eines zweiten voreingestellten Schwellenwerts liegt; und
wenn die Ladevorrichtung (400) bestimmt, dass der Absolutwert der Differenz zwischen dem ersten Spannungswert und dem zweiten Spannungswert innerhalb des ersten voreingestellten Schwellenwerts liegt und dass der Absolutwert der Differenz zwischen dem ersten Zeitwert und dem zweiten Zeitwert innerhalb des zweiten voreingestellten Schwellenwerts liegt, die Ladevorrichtung (400) dafür ausgelegt ist, den ersten Gleichstromversorgungskontakt und den zweiten Gleichstromversorgungskontakt zum Laden des Elektrofahrzeugs freizugeben.

2. Ladevorrichtung (400) nach Anspruch 1, wobei die erste Ladeschnittstelle (606) ferner einen ersten Kommunikationskontakt umfasst und die zweite Ladeschnittstelle (607) ferner einen zweiten Kommunikationskontakt umfasst; und
in einem Fall, in dem die Ladevorrichtungssteuerung (600) das erste Spannungssignal oder das zweite Spannungssignal erhält, die Ladevorrichtung (400) für folgende Vorgänge ausgelegt ist:
Erhalten eines ersten Kommunikationssignals des ersten Kommunikationskontakts, wobei das erste Kommunikationssignal erste Ladeinformationen des Elektrofahrzeugs umfasst und die ersten Ladeinformationen eine erste Fahrzeug-Handshake-Nachricht, eine erste Fahrzeugerkennungsnachricht und eine erste Fahrzeugidentifikationsnummer umfassen;
Erhalten eines zweiten Kommunikationssignals des zweiten Kommunikationskontakts, wobei das zweite Kommunikationssignal zweite Ladeinformationen des Elektrofahrzeugs umfasst und die zweiten Ladeinformationen eine zweite Fahrzeug-Handshake-Nachricht, eine zweite Fahrzeugerkennungsnachricht und eine zweite Fahrzeugidentifikationsnummer umfassen; und
Freigeben des ersten Gleichstromversorgungskontakts und des zweiten Gleichstromversorgungskontakts auf der Grundlage der ersten Ladeinformationen und der zweiten Ladeinformationen zum Laden des Elektrofahrzeugs.

3. Ladevorrichtung (400) nach Anspruch 2, wobei die Fahrzeug-Handshake-Nachricht Informationen über eine zulässige Ladespannung einer Fahrzeugbatterie umfasst und die Fahrzeugerkennungsnachricht Informationen über eine Art von Fahrzeugbatterie, eine Batterienennkapazität und eine Batterienennspannung umfasst; und
in einem Fall, dass die ersten Ladeinformationen die gleichen sind wie die zweiten Ladeinformationen, die Ladevorrichtung (400) dafür ausgelegt ist, den ersten Gleichstromversorgungskontakt und den zweiten Gleichstromversorgungskontakt zum Laden des Elektrofahrzeugs freizugeben.

4. Verfahren zum Laden eines Elektrofahrzeugs durch eine Ladevorrichtung (400), wobei das Verfahren umfasst:
Speichern einer Zustandsmaschine, wobei die Zustandsmaschine eine Vielzahl von Zuständen umfasst und jeder der Vielzahl von Zuständen zum Verwalten eines Ladevorgangs in einem Ladeprozess der Ladevorrichtung (400) dient; und
die Vielzahl von Zuständen einen Doppelladeschnittstellenverbindungszustand und einen Doppelladeschnittstellenstromversorgungszustand umfassen, wobei der Doppelladeschnittstellenverbindungszustand angibt, dass eine erste Ladeschnittstelle (606) der Ladevorrichtung (400) und eine zweite Ladeschnittstelle (607) der Ladevorrichtung (400) physisch mit dem Elektrofahrzeug verbunden sind, und der Doppelladeschnittstellenstromversorgungszustand angibt, dass ein erster Gleichstromversorgungskontakt der Ladevorrichtung (400) und ein zweiter Gleichstromversorgungskontakt der Ladevorrichtung (400) das Elektrofahrzeug laden; und
Auslegen einer Ladevorrichtungssteuerung (600) der Ladevorrichtung (400) zum Steuern, auf der Grundlage der Zustandsmaschine, der Ladevorrichtung (400) zum Laden des Elektrofahrzeugs,
wobei die Vielzahl von Zuständen ferner einen Hilfsstromversorgungseinschaltzustand umfasst und der Hilfsstromversorgungseinschaltzustand angibt, dass eine Hilfsstromversorgung der Ladevorrichtung (400) einer Steuerung des Elektrofahrzeugs Strom zuführt,
wobei ein erstes Spannungssignal eines Hilfsstromversorgungskontakts der ersten Ladeschnittstelle (606) einen ersten Spannungswert und einen ersten Zeitwert umfasst,
wobei der erste Spannungswert ein Spannungswert des Hilfsstromversorgungskontakts der ersten Ladeschnittstelle (606) ist und der erste Zeitwert eine Zeit ist, zu der die Ladevorrichtung (400) den ersten Spannungswert erhält;
ein zweites Spannungssignal eines Hilfsstromversorgungskontakts der zweiten Ladeschnittstelle (607) einen zweiten Spannungswert und einen zweiten Zeitwert umfasst,
wobei der zweite Spannungswert ein Spannungswert des Hilfsstromversorgungskontakts der zweiten Ladeschnittstelle (607) ist und der zweite Zeitwert eine Zeit ist, zu der die Ladevorrichtung (400) den zweiten Spannungswert erhält; und
wenn bestimmt wird, dass ein Absolutwert einer Differenz zwischen dem ersten Spannungswert und dem zweiten Spannungswert innerhalb eines ersten voreingestellten Schwellenwerts liegt und ein Absolutwert einer Differenz zwischen dem ersten Zeitwert und dem zweiten Zeitwert innerhalb eines zweiten voreingestellten Schwellenwerts liegt, die Ladevorrichtung (400) den Hilfsstromversorgungseinschaltzustand verlässt und in den Doppelladeschnittstellenstromversorgungszustand übergeht.

5. Verfahren nach Anspruch 4, wobei die Zustandsmaschine dafür ausgelegt ist, eine Eintrittsbedingung und eine Austrittsbedingung für mindestens einen der Vielzahl von Zuständen bereitzustellen.

6. Verfahren nach einem der Ansprüche 4 oder 5, wobei eine Eintrittsbedingung für den Hilfsstromversorgungseinschaltzustand darin besteht, dass: die Ladevorrichtungssteuerung (600) erfasst, dass ein Spannungswert eines Ladeverbindungsbestätigungskontakts der ersten Ladeschnittstelle (606) und ein Spannungswert eines Ladeverbindungsbestätigungskontakts der zweiten Ladeschnittstelle (607) beide 4 V betragen; und
eine Austrittsbedingung für den Hilfsstromversorgungseinschaltzustand darin besteht, dass:
die Ladevorrichtungssteuerung (600) ein erstes Spannungssignal eines Hilfsstromversorgungskontakts der ersten Ladeschnittstelle (606) oder ein zweites Spannungssignal eines Hilfsstromversorgungskontakts der zweiten Ladeschnittstelle (607) erhält; oder
die Ladevorrichtungssteuerung (600) das erste Spannungssignal und das zweite Spannungssignal erhält und bestimmt, dass das erste Spannungssignal und das zweite Spannungssignal eine voreingestellte Bedingung erfüllen.

7. Verfahren nach einem der Ansprüche 4 bis 6, wobei die Vielzahl von Zuständen ferner einen Doppelladevorgang-Handshake-Erkennungszustand umfasst und der Doppelladevorgang-Handshake-Erkennungszustand angibt, dass die Ladevorrichtung (400) in Kommunikation mit dem Elektrofahrzeug steht;
eine Eintrittsbedingung des Doppelladevorgang-Handshake-Erkennungszustands darin besteht, dass: die Ladevorrichtungssteuerung (600) das erste Spannungssignal oder das zweite Spannungssignal erhält; und
eine Austrittsbedingung des Doppelladevorgang-Handshake-Erkennungszustands darin besteht, dass: die Ladevorrichtungssteuerung (600) ein erstes Kommunikationssignal und ein zweites Kommunikationssignal erhält und bestimmt, dass das erste Kommunikationssignal und das zweite Kommunikationssignal eine voreingestellte Bedingung erfüllen, wobei
das erste Kommunikationssignal erste Ladeinformationen umfasst, die ersten Ladeinformationen eine erste Fahrzeug-Handshake-Nachricht, eine erste Fahrzeugerkennungsnachricht und eine erste Fahrzeugidentifikationsnummer umfassen, das zweite Kommunikationssignal zweite Ladeinformationen umfasst und die zweiten Ladeinformationen eine zweite Fahrzeug-Handshake-Nachricht, eine zweite Fahrzeugerkennungsnachricht und eine zweite Fahrzeugidentifikationsnummer umfassen.

8. Verfahren nach Anspruch 7, wobei die Fahrzeug-Handshake-Nachricht Informationen über eine zulässige Ladespannung einer Fahrzeugbatterie umfasst und die Fahrzeugerkennungsnachricht Informationen über eine Art von Fahrzeugbatterie, eine Batterienennkapazität und eine Batterienennspannung umfasst; und
wenn bestimmt wird, dass die ersten Ladeinformationen die gleichen sind wie die zweiten Ladeinformationen, die Ladevorrichtung (400) den Doppelladevorgang-Handshake-Erkennungszustand verlässt und in den Doppelladeschnittstellenstromversorgungszustand eintritt.

9. Verfahren nach einem der Ansprüche 4 bis 8, wobei eine Austrittsbedingung des Doppelladeschnittstellenverbindungszustands darin besteht, dass: die Ladevorrichtungssteuerung (600) erfasst, dass der Spannungswert des Ladeverbindungsbestätigungskontakts der ersten Ladeschnittstelle (606) und der Spannungswert des Ladeverbindungsbestätigungskontakts der zweiten Ladeschnittstelle (607) beide 4 V betragen.

## Revendications

1. Dispositif de recharge (400) pour recharger un véhicule électrique, le dispositif de recharge (400) comprenant une première interface de recharge (606) et une seconde interface de recharge (607), un premier module de détection de tension d'alimentation auxiliaire (23, 604), un second module de détection de tension d'alimentation auxiliaire (24, 605) et un dispositif de commande de dispositif de recharge (600),
la première interface de recharge (606) comprenant un premier contact d'alimentation auxiliaire (A+, A-) et un premier contact d'alimentation en courant continu, le premier contact d'alimentation auxiliaire (A+, A-) étant configuré pour alimenter un dispositif de commande du véhicule électrique ; et
la seconde interface de recharge (607) comprenant un second contact d'alimentation auxiliaire (A+, A-) et un second contact d'alimentation en courant continu ; et
le dispositif de recharge (400) étant configuré pour :
détecter un premier signal de tension du premier contact d'alimentation auxiliaire (A+, A-) et un second signal de tension du second contact d'alimentation auxiliaire (A+, A-),
le premier signal de tension comprenant une première valeur de tension et une première valeur de temps, la première valeur de tension étant une valeur de tension du premier contact d'alimentation auxiliaire (A+, A-), et la première valeur de temps étant le temps où le dispositif de recharge (400) obtient la première valeur de tension ; et
le second signal de tension comprenant une seconde valeur de tension et une seconde valeur de temps, la seconde valeur de tension étant une valeur de tension du second contact d'alimentation auxiliaire (A+, A-), et la seconde valeur de temps étant le temps où le dispositif de recharge (400) obtient la seconde valeur de tension,
le premier module de détection de tension d'alimentation auxiliaire (23, 604) étant configuré pour détecter la valeur de tension du premier contact d'alimentation auxiliaire (A+, A-) ;
le second module de détection de tension d'alimentation auxiliaire (24, 605) étant configuré pour détecter la valeur de tension du second contact d'alimentation auxiliaire (A+, A-) ; et
le dispositif de commande de dispositif de recharge (600) étant configuré pour obtenir le premier signal de tension et le second signal de tension,
dans un cas où le dispositif de commande de dispositif de recharge (600) obtient le premier signal de tension et le second signal de tension, le dispositif de recharge (400) étant configuré pour :
déterminer si une valeur absolue d'une différence entre la première valeur de tension et la seconde valeur de tension est inférieure à un premier seuil prédéfini et si une valeur absolue d'une différence entre la première valeur de temps et la seconde valeur de temps est inférieure à un second seuil prédéfini ; et
si le dispositif de recharge (400) détermine que la valeur absolue de la différence entre la première valeur de tension et la seconde valeur de tension est inférieure au premier seuil prédéfini et que la valeur absolue de la différence entre la première valeur de temps et la seconde valeur de temps est inférieure au second seuil prédéfini, le dispositif de recharge (400) étant configuré pour activer le premier contact d'alimentation en courant continu et le second contact d'alimentation en courant continu pour recharger le véhicule électrique.

2. Dispositif de recharge (400) selon la revendication 1, la première interface de recharge (606) comprenant en outre un premier contact de communication et la seconde interface de recharge (607) comprenant en outre un second contact de communication ; et dans un cas où le dispositif de commande de dispositif de recharge (600) obtient le premier signal de tension ou le second signal de tension, le dispositif de recharge (400) étant configuré pour :
obtenir un premier signal de communication du premier contact de communication, le premier signal de communication comprenant des premières informations de recharge du véhicule électrique, et les premières informations de recharge comprenant un premier message d'établissement de liaison avec véhicule, un premier message de reconnaissance de véhicule et un premier numéro d'identification de véhicule ;
obtenir un second signal de communication du second contact de communication, le second signal de communication comprenant des secondes informations de recharge du véhicule électrique, et les secondes informations de recharge comprenant un second message d'établissement de liaison avec véhicule, un second message de reconnaissance de véhicule et un second numéro d'identification de véhicule ; et
activer le premier contact d'alimentation en courant continu et le second contact d'alimentation en courant continu sur la base des premières informations de recharge et des secondes informations de recharge pour recharger le véhicule électrique.

3. Dispositif de recharge (400) selon la revendication 2, le message d'établissement de liaison avec véhicule comprenant des informations sur une tension de recharge admissible d'une batterie de véhicule, et le message de reconnaissance de véhicule comprenant des informations sur un type de batterie de véhicule, une capacité nominale de batterie et une tension nominale de batterie ; et
dans un cas où les premières informations de recharge sont les mêmes que les secondes informations de recharge, le dispositif de recharge (400) étant configuré pour activer le premier contact d'alimentation en courant continu et le second contact d'alimentation en courant continu pour recharger le véhicule électrique.

4. Procédé de recharge d'un véhicule électrique par un dispositif de recharge (400), le procédé comprenant les étapes consistant à :
stocker une machine à états, la machine à états comprenant une pluralité d'états, et chaque état de la pluralité d'états étant destiné à gérer une action de recharge lors d'un processus de recharge du dispositif de recharge (400) ; et
la pluralité d'états comprenant un double état de connexion d'interface de recharge et un double état d'alimentation d'interface de recharge, le double état de connexion d'interface de recharge indiquant qu'une première interface de recharge (606) du dispositif de recharge (400) et qu'une seconde interface de recharge (607) du dispositif de recharge (400) sont connectées physiquement au véhicule électrique, et le double état d'alimentation d'interface de recharge indiquant qu'un premier contact d'alimentation en courant continu du dispositif de recharge (400) et qu'un second contact d'alimentation en courant continu du dispositif de recharge (400) rechargent le véhicule électrique ; et
configurer un dispositif de commande de dispositif de recharge (600) du dispositif de recharge (400) pour commander, sur la base de la machine à états, le dispositif de recharge (400) pour qu'il recharge le véhicule électrique,
la pluralité d'états comprenant en outre un état de mise sous tension d'alimentation auxiliaire, et l'état de mise sous tension d'alimentation auxiliaire indiquant qu'une alimentation auxiliaire du dispositif de recharge (400) alimente un dispositif de commande du véhicule électrique,
un premier signal de tension d'un contact d'alimentation auxiliaire de la première interface de recharge (606) comprenant une première valeur de tension et une première valeur de temps, la première valeur de tension étant une valeur de tension du contact d'alimentation auxiliaire de la première interface de recharge (606), et la première valeur de temps étant le temps où le dispositif de recharge (400) obtient la première valeur de tension ;
un second signal de tension d'un contact d'alimentation auxiliaire de la seconde interface de recharge (607) comprenant une seconde valeur de tension et une seconde valeur de temps, la seconde valeur de tension étant une valeur de tension du contact d'alimentation auxiliaire de la seconde interface de recharge (607), et la seconde valeur de temps étant le temps où le dispositif de recharge (400) obtient la seconde valeur de tension ; et
lorsqu'il est déterminé qu'une valeur absolue d'une différence entre la première valeur de tension et la seconde valeur de tension est inférieure à un premier seuil prédéfini et qu'une valeur absolue d'une différence entre la première valeur de temps et la seconde valeur de temps est inférieure à un second seuil prédéfini, le dispositif de recharge (400) quittant l'état de mise sous tension d'alimentation auxiliaire et entrant dans le double état d'alimentation d'interface de recharge.

5. Procédé selon la revendication 4, la machine à états étant configurée pour fournir une condition d'entrée et une condition de sortie d'au moins un état de la pluralité d'états.

6. Procédé selon l'une des revendications 4 et 5, une condition d'entrée de l'état de mise sous tension d'alimentation auxiliaire étant que : le dispositif de commande de dispositif de recharge (600) détecte qu'une valeur de tension d'un contact de confirmation de connexion de recharge de la première interface de recharge (606) et qu'une valeur de tension d'un contact de confirmation de connexion de recharge de la seconde interface de recharge (607) sont toutes deux égales à 4 V ; et
une condition de sortie de l'état de mise sous tension d'alimentation auxiliaire étant que :
le dispositif de commande de dispositif de recharge (600) obtient un premier signal de tension d'un contact d'alimentation auxiliaire de la première interface de recharge (606) ou un second signal de tension d'un contact d'alimentation auxiliaire de la seconde interface de recharge (607) ; ou
le dispositif de commande de dispositif de recharge (600) obtient le premier signal de tension et le second signal de tension et détermine que le premier signal de tension et le second signal de tension satisfont à une condition prédéfinie.

7. Procédé selon l'une quelconque des revendications 4 à 6, la pluralité d'états comprenant en outre un double état de reconnaissance d'établissement de liaison de recharge, et le double état de reconnaissance d'établissement de liaison de recharge indiquant que le dispositif de recharge (400) est en communication avec le véhicule électrique ;
une condition d'entrée du double état de reconnaissance d'établissement de liaison de recharge étant que : le dispositif de commande de dispositif de recharge (600) obtient le premier signal de tension ou le second signal de tension ; et
une condition de sortie du double état de reconnaissance d'établissement de liaison de recharge étant que : le dispositif de commande de dispositif de recharge (600) obtient un premier signal de communication et un second signal de communication et détermine que le premier signal de communication et le second signal de communication satisfont à une condition prédéfinie,
le premier signal de communication comprenant des premières informations de recharge, les premières informations de recharge comprenant un premier message d'établissement de liaison avec véhicule, un premier message de reconnaissance de véhicule et un premier numéro d'identification de véhicule, le second signal de communication comprenant des secondes informations de recharge, et les secondes informations de recharge comprenant un second message d'établissement de liaison avec véhicule, un second message de reconnaissance de véhicule et un second numéro d'identification de véhicule.

8. Procédé selon la revendication 7, le message d'établissement de liaison avec véhicule comprenant des informations sur une tension de recharge admissible d'une batterie de véhicule, et le message de reconnaissance de véhicule comprenant des informations sur un type de batterie de véhicule, une capacité nominale de batterie et une tension nominale de batterie ; et
lorsqu'il est déterminé que les premières informations de recharge sont les mêmes que les secondes informations de recharge, le dispositif de recharge (400) quittant le double état de reconnaissance d'établissement de liaison de recharge et entrant dans le double état d'alimentation d'interface de recharge.

9. Procédé selon l'une quelconque des revendications 4 à 8, une condition de sortie du double état de connexion d'interface de recharge étant que : le dispositif de commande de dispositif de recharge (600) détecte que la valeur de tension du contact de confirmation de connexion de recharge de la première interface de recharge (606) et que la valeur de tension du contact de confirmation de connexion de recharge de la seconde interface de recharge (607) sont toutes deux égales à 4 V.
